# EUROPEAN PATENT SPECIFICATION

(11) **EP 1 314 142 B1**
(45) Date of publication and mention of the grant of the patent: **06.04.2005**
(21) Application number: 01940740.2
(22) Date of filing: 18.06.2001
(51) Int. Cl.: G07F 1/00, A47G 29/14, G06F 17/60, G07F 17/12

(54) **SECURE DELIVERY SYSTEM**
SICHERES LIEFERUNGSSYSTEM
SYSTEME DE LIVRAISON SECURISE

(30) Priority: 23.08.2000 US 644262
(43) Date of publication of application: 28.05.2003
(73) Proprietor: Homeport (Cayman) Limited, George Town (KY)
(72) Inventor: BUTLER, Charles, Alexei, 18600 Praha 8 (CZ)
(74) Representative: Geary, Stuart Lloyd
(86) International application number: PCT/GB2001/002678
(87) International publication number: WO 2002/017246

(56) References cited:
- WO-A-99/15393
- FR-A- 2 732 140
- GB-A- 2 340 479
- US-A- 4 878 045
- US-A- 5 774 053
- US-A- 5 979 750

## Description

A first aspect of the present invention relates to an anchoring fixture for a delivery point, the anchoring fixture comprising a body, fastening means for securely fastening the body to a substantially immovable structure, a socket, including an electrically operated locking member, for receiving and locking a plug therein, input means for inputting identity signals and control means configured to operate said locking means to release a plug, received within said socket, in dependence on identity signals, input using the input means.

A second aspect of the present invention relates to a method of delivering an item, the method comprising receiving an order for an item, transporting said item and an attachment element to a delivery site and attaching said item to an anchoring fixture by plugging said plug into a socket in said anchoring fixture.

A third aspect of the present invention relates to a method of delivering an item, the method comprising receiving an order for an item, allocating an attachment element to the item and to a delivery site, transporting said item and said attachment element to the delivery site, plugging the plug into a said anchoring fixture to attach the item to the anchoring fixture.

On-line shopping and subsequent delivery of the goods to the recipient's delivery address is becoming increasingly popular as customers prefer the convenience of ordering goods via the Internet.

Some supermarkets already offer a home delivery service which allows customers to telephone in their order or place it through the Internet. On receipt of an order, a staff member at the supermarket assembles the ordered items ready for delivery to the customer's delivery address. However, this can be extremely inefficient for the supermarket if the recipient is not at home at the time of the delivery. This is a particular problem where access to the interior of the delivery address is denied at the time of delivery as the goods cannot usually be left unattended so they have to be taken back to the supermarket and further delivery arrangements made.

A simple delivery box is disclosed in GB-A-2340479.

Supermarkets are increasingly investing in computer technology to enable customers to order goods using their personal computers but the problem of providing for secure delivery still has to be solved.

An anchoring fixture, according to the present invention, is characterised by plug id detecting means, associated with said socket, for detecting a machine readable id carried by a plug, adapted to be received by said socket, wherein the control means is configured to lock a plug in said socket in response to input of a deliverer id using the input means, release a plug from said socket in response to input of a recipient id using the input means, and to release a plug from said socket in response to input of a deliverer id using the input means.

Preferred and optional features of the anchoring fixture are set forth in claims 2 to 11 appended hereto.

An anchoring fixture according to the present invention may be used in a delivery system which also includes a handheld device for communicating with the anchoring fixture.

Preferred and optional features of the delivery system are set forth in claims 13 to 16 appended hereto.

A method, according to the second aspect of the present invention, is characterised by transmitting a machine-readable id of said plug and an anchoring fixture id from the anchoring fixture to a handheld device, locking said plug in said socket and transmitting a deliverer id from said handheld device to said anchoring fixture and validating said deliverer id, wherein locking of said plug in said socket is dependent on the validity of said deliverer id.

Preferred and optional features of the method of the second aspect are set forth in claim 18 appended hereto.

A method, according to the third aspect of the present invention, is characterised by providing the attachment element with a plug having a machine readable id, transmitting the id of the plug to an anchoring fixture at the delivery site, reading of the id of the plug by the anchoring fixture, comparing the transmitted id and the id read from the plug in the anchoring fixture and automatically locking the plug in the anchoring fixture if the transmitted id and the id read from the plug match.

Preferred and optional features of the method of the third aspect are set forth in claims 20 to 27 appended hereto.

It is to be understood that the afore-mentioned ids need not be unique and need only be sufficiently for the purpose of identifying persons legitimately interacting with an anchoring fixture. For example, all deliverers working for the same organisation may use the same deliverer id.

Preferred embodiments of the present invention will now be described, by way of example, with reference to the accompanying drawings, in which:
Figure 1 is a perspective view of a delivery container in accordance with the present invention;
Figure 2 is a front view of the delivery container shown in Figure 1;
Figure 3 is a perspective view of a docking station in accordance with the present invention;
Figure 4 is a sectional view, along the line A-A in Figure 3, of the docking station shown in Figure 3;
Figures 5(a) and (b) are side and front views respectively of the plug shown in Figure 2;
Figure 6 is a block diagram of the circuitry of the docking station shown in Figure 3;
Figure 7 is a perspective view of an communicator in accordance with the present invention;
Figure 8 is a block diagram of the communicator shown in Figure 7;
Figure 9 is a schematic diagram of a warehouse system in accordance with the present invention;
Figure 10 is a data flow diagram of the warehouse system shown in Figure 9;
Figure 11 is a data flow diagram of a market web server in accordance with the present invention;
Figure 12 is a data flow diagram of an authorisation processor in accordance with the present invention;
Figure 13 is a signalling diagram illustrating an online purchase;
Figure 14 is a flowchart illustrating the order receiving process of the warehouse system shown in Figure 10;
Figure 15 is a flowchart illustrating the order authorising process of the warehouse system shown in Figure 10;
Figure 16 is a flowchart illustrating the cable allocating process of the warehouse system shown in Figure 10;
Figure 17 is a flowchart illustrating the communicator load process of the warehouse system shown in Figure 10;
Figure 18 is a flowchart illustrating return container identifying process of the docking station shown in Figure 3;
Figure 19 is a flowchart illustrating the contain accept/reject process of the docking station shown in Figure 3;
Figure 20 is a signalling diagram illustrating a logout exchange between the docking station shown in Figure 3 and the communicator shown in Figure 18;
Figure 21 is a flowchart illustrating an item return identification process of the docking station shown in Figure 3;
Figure 22 is a schematic diagram of another warehouse system in accordance with the present invention;
Figure 23 is a data flow diagram of the warehouse system shown in Figure 22;
Figure 24 is a data flow diagram of a vendor web server;
Figure 25 is a data flow diagram of a customer processor;
Figure 26 is a flowchart illustrating a customer registration process;
Figure 27 is a signalling diagram illustrating an online purchase;
Figure 28 is a flowchart illustrating generation of a customer profile web page;
Figure 29 shows a customer profile web page;
Figure 30 is a flowchart illustrating the order receiving process of the warehouse system shown in Figure 22;
Figure 31 is a flowchart illustrating the process of delivering a container;
Figure 32 is a flowchart illustrating the process of collecting a container;
Figure 33 is a flowchart illustrating an item return identification process of the docking station; and
Figure 34 is a sectional view of a docking station including a mobile phone module.

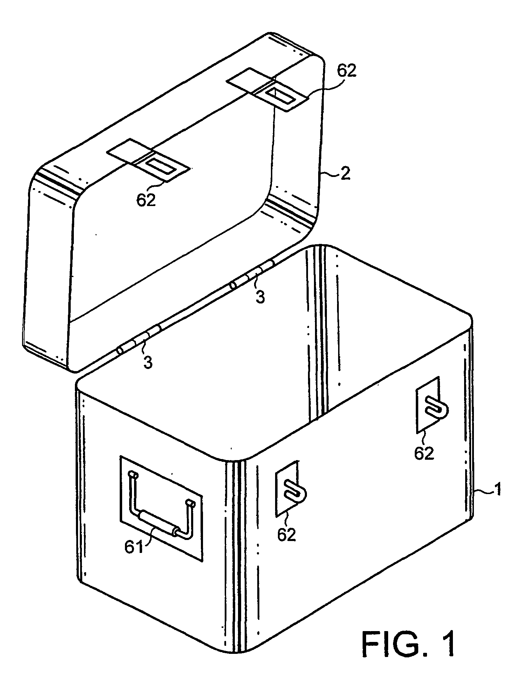

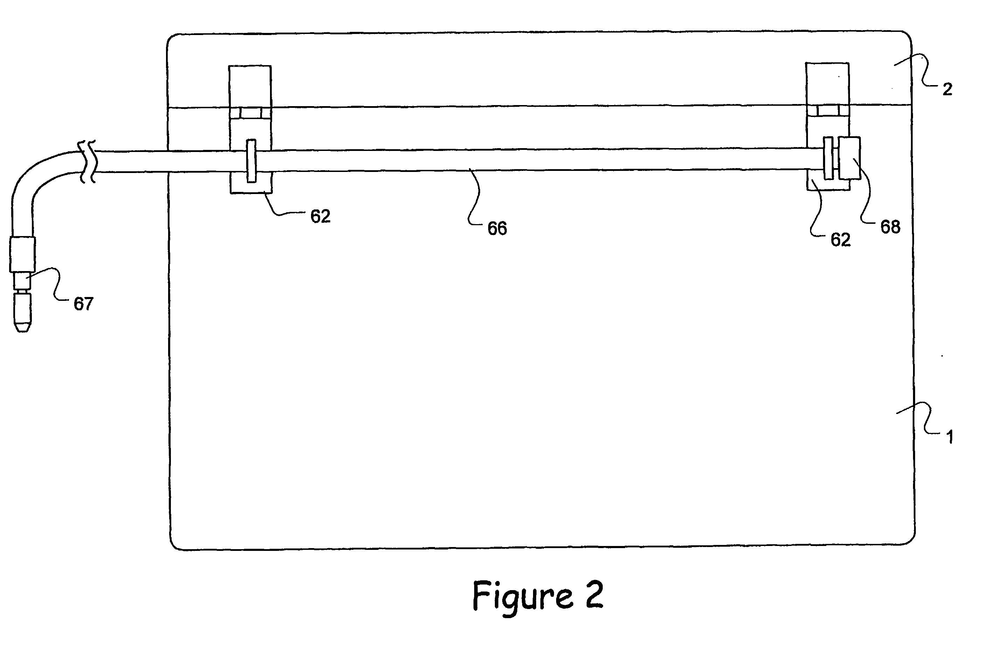

Referring to Figures 1 and 2, a deliverable container 1 has a lid 2 pivotally attached thereto by hinges 3. The container 1 is made from a very strong plastics material such as PVC or a metal that is light and tough enough to ensure a long life in use but is also waterproof. Depending on its use, it may also incorporate some form of insulating lining material. Handles 61 are provided on the side walls of the container 1 so that it may be carried more easily. A pair of hasps 62 is provided for holding the lid 2 closed. A plastic coated steel cable 66 serves as the pins of the hasps 62. The steel cable 66 has a plug 67 at one end which thin enough to pass through the loops of the hasps 62. The other end of the cable 66 has an enlarged part 68 which cannot pass through the loops of the hasps 62.

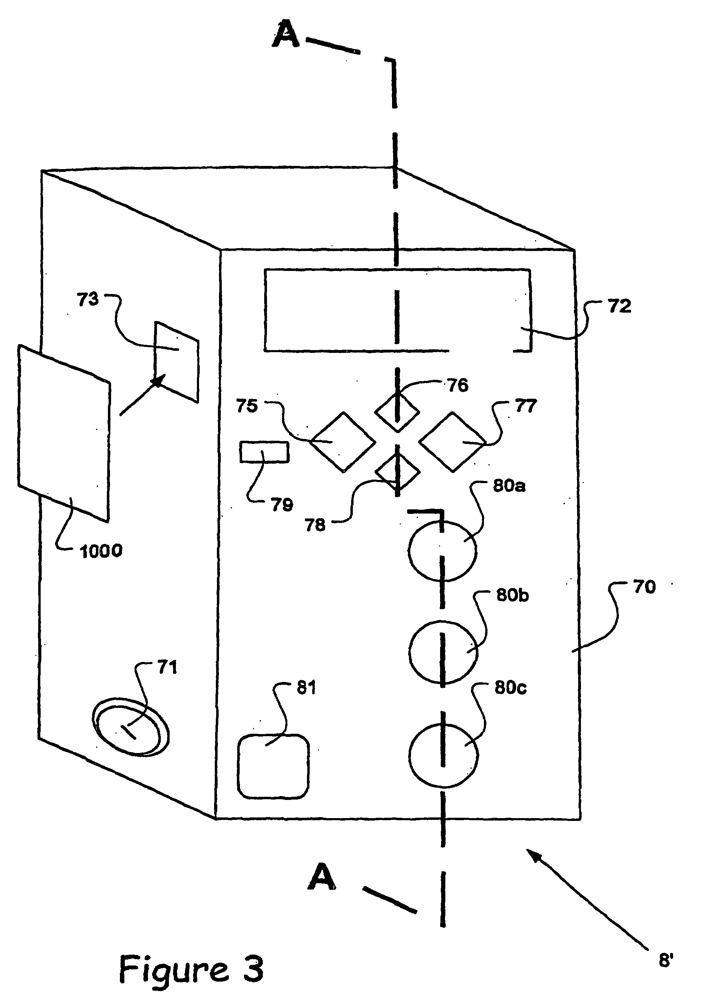

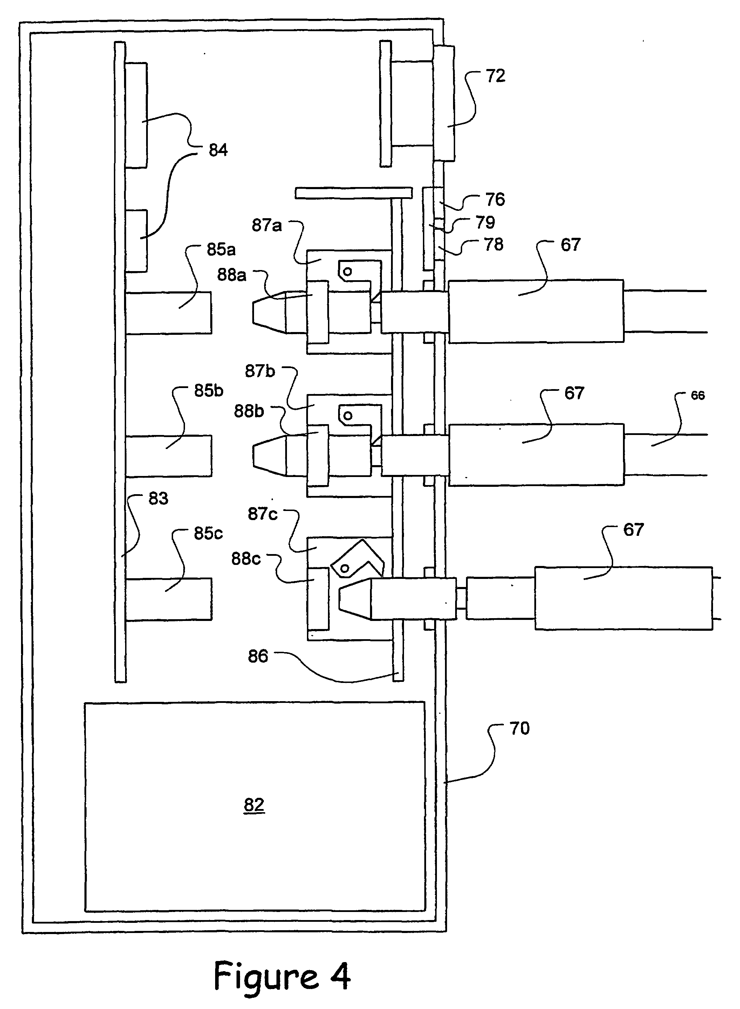

Referring to Figures 3 and 4, the docking station 8 comprises a box-like housing 70 which is locked closed by a lock 71. The docking station 8 is adapted to be bolted to a wall by rawlbolts or the like (not shown) which are inaccessible when the housing 70 locked closed.

A display 72 is located at the top of the front panel of the docking station 8. An inductive chip card reader 73, for reading chip cards 1000, is located on the lefthand side wall of the housing 70, slightly below the display 72. Below the display 72 on the front of the housing 70 are first, second, third and fourth membrane switches 75, 76, 77, 78 of a keypad 79. To the left of the membrane switches 75, 76, 77, 78 is an IR port window 79. First, second and third sockets 80a, 80b, 80c are arranged one above another below the membrane switches 75, 76, 77, 78 and an on/off switch 81 is located at the bottom left corner of the front of the housing 70.

A battery 82 is located at the bottom of the housing 70. A first PCB 83 extends vertically within the housing 70 above the battery 82. The first PCB 83 carries the main circuitry 84 of the unit and three induction sensors 85a, 85b, 85c which are aligned with respective sockets 80a, 80b, 80c. A second PCB 86 lies parallel to the first PCB 83 between it and the front panel of the housing 70. The second PCB 86 supports first, second and third electromechanical latches 87a, 87b, 87c associated with respectively the first, second and third sockets 80a, 80b, 80c. A respective ring 88a, 88b, 88c is provided on each of the latches 87a, 87b, 87c for supporting the ends of plugs 67 inserted into the sockets 80a, 80b, 80c. A third PCB 89 is located across the top of the second PCB 86 and supports the chip card reader 74.

The wiring between the components within the housing 70 has been omitted in Figure 4 in the interest of clarity.

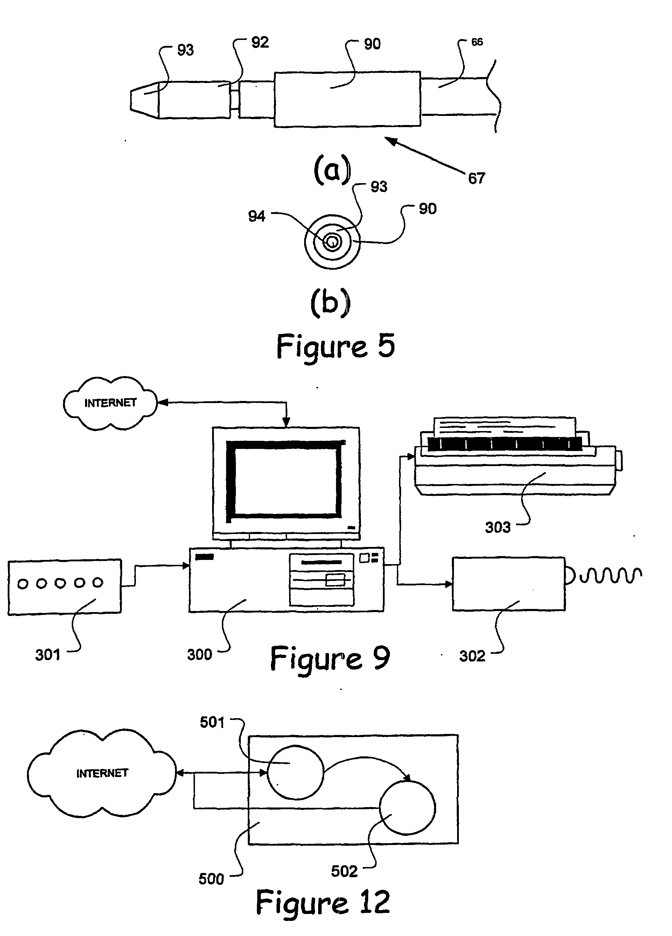

Referring to Figures 5(a) and (b), each plug 67 comprises a cylindrical root portion 90 into which is fastened the end of the steel cable 66. A shaft 92, which is configured for insertion into the sockets 80a, 80b, 80c projects from the root 90. The tip 93 of the shaft 92 is plastic and frusto-conical, and has an axial bore 94 opening in its end face. The bore 94 provides access to a magnetic id chip within the tip 93. A groove 95 is formed around the shaft 92 part-way along its length from the root 90 for receiving the locking members of the electromechanical latches 87a, 87b, 87c.

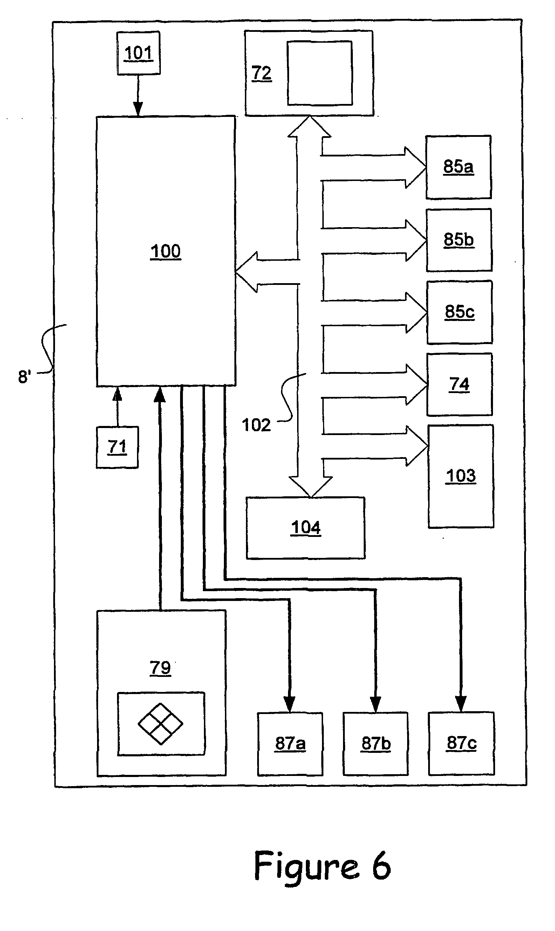

Referring to Figure 6, electrically, the docking station 8 comprises a microcontroller 100 having ports connected to the on/off switch 91, the keypad 79 containing the membrane switches 75, ..., 78, and an infrared transceiver 101. The microcontroller 100 also has output ports for signalling to the electromagnetic latches 87a, 87b, 87c. A bus 102 connects the microcontroller 100 to the sensors 85a, 85b, 85c, the card reader 74, ROM 103, RAM 104 and the display 72. The ROM 104 stores control programs for controlling the operation of the docking station 8.

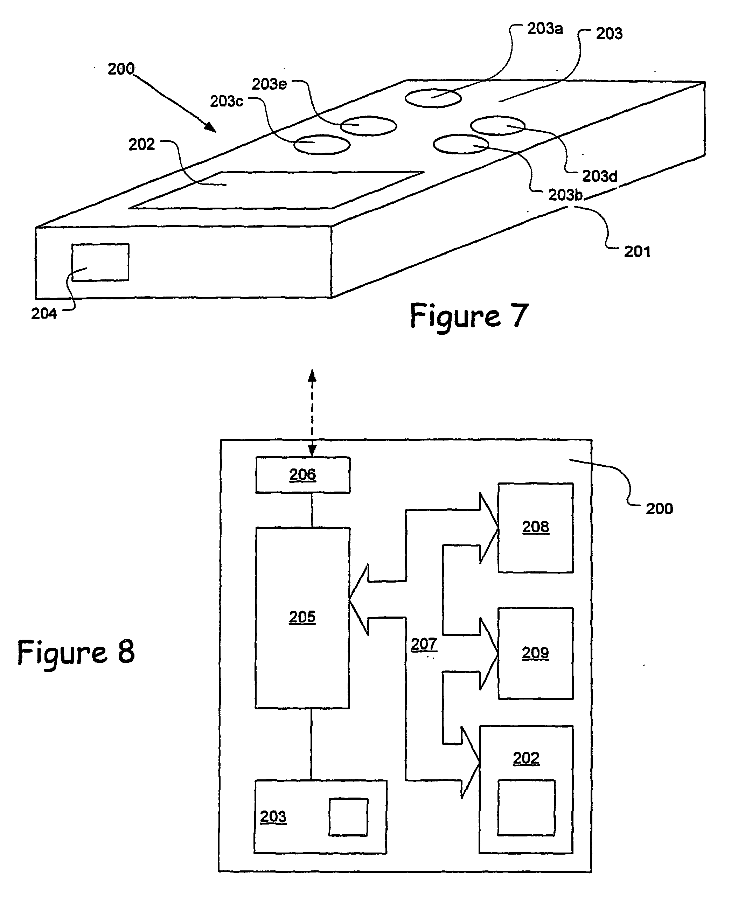

Referring to Figures 7, a portable communicator 200, for interrogating the docking station 8, comprises a flattened cuboid casing 201 conveniently sized for hand-held use. A display 202 and a keypad 203 are mounted to a top face of the casing 201 and an IR window 204 is located in one end face of the casing 201.

The keypad 203 comprises an on/off key 203a, a load key 203b, a report key 203c, a docking station login key ("login key") 203d and a docking station logout key ("logout key") 203e. The purposes of these keys will become apparent from the following description.

Referring to Figure 8, internally the communicator 200 comprises a microcontroller 205 with serial connections to the keypad 203 and an IR transceiver 206. A bus 207 connects the microcontroller 205 to the display 202, ROM 208 and RAM 209. The ROM 208 stored control programs for controlling the operation of the communicator 200.

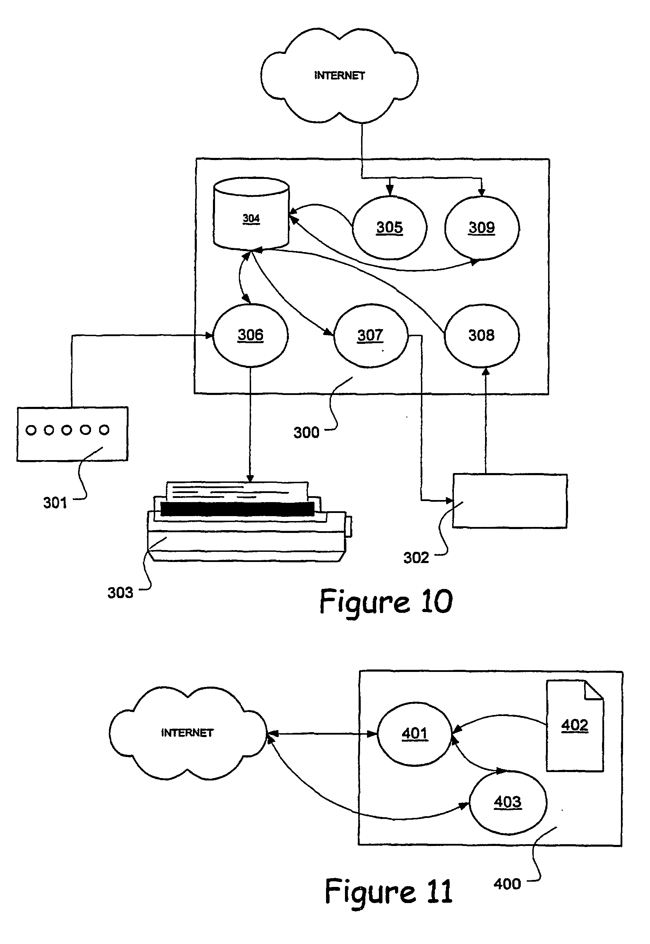

Referring to Figure 9, a warehouse system comprises a personal computer 300 connected to a plug reader 301, an IR transceiver 302 and a printer 303. The plug reader 301 has a plurality of sockets for receiving plugs 67 (Figure 5). The personal computer 300 is also connected to the Internet and is programmed for administering the delivery of orders to users. For this purpose, it can read the chips in plugs 67, load data into portable communicators 200 and receive data from portable communicators 200.

Referring to Figure 10, the personal computer 300 supports a database 304 for storing order data and the whereabouts of containers 1, an order receiving process 305 for receiving orders from the Internet and storing them in the database 304, a cable allocation process 306 for allocating container cables 66 to orders and printing out inventories and delivery details for containers 1, an communicator load process 307 for loading delivery information into communicators 200, a report receiving process 308 for receiving delivery reports from communicators 200 and an order authorising process 309 for confirming authorisation of an order.

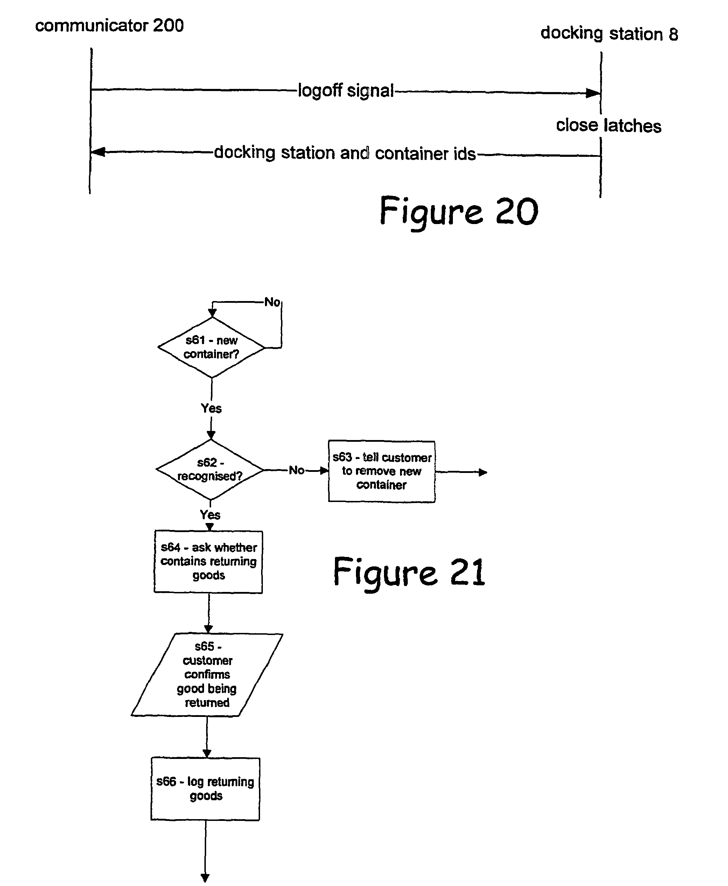

Referring to Figure 11, a market web server machine 400 supports a web server process 401, such as Apache, and associated HTML documents 402 and CGI scripts 403. The documents 402 and the CGI scripts 403 provide the web server machine 400 with conventional e-commerce functions, e.g. filling of a virtual shopping cart with items, credit card processing etc.. In the present example, the goods offered are supplied by different vendors. Consequently, an order processing CGI script 403 divides each order into sub-orders according to vendor and transmits each sub-order to the appropriate warehouse system (Figure 20).

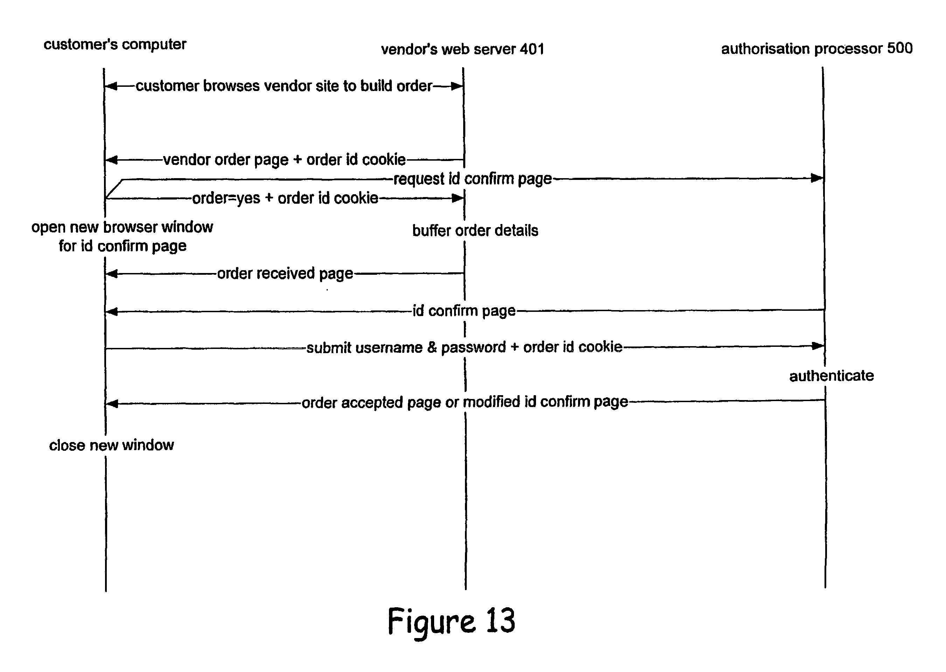

Referring to Figure 12, an authorisation processor 500 comprises an http server 501 and a custom order confirmation server 502 for confirming the validity of orders to warehouse systems.

The operation of the docking station 1, the communicator 200, the warehouse system, the market web server machine 400 and the authorisation processor 500 will become more fully apparent from the description of the processing of an order given below.

A customer has a docking station 8 mounted to a wall of their premises. In order to place an order, the customer uses a web browser to view the market web site provided by the market web server machine 400.

Referring to Figure 13, the customer browses the pages available at the market web server machine 400 adding items to a "shopping cart" in the conventional manner. When the customer has added all the items that the customer wishes to purchase to the "shopping cart", the customer requests an order page from the web server 401. The order page is accompanied by a cookie containing a unique order id. The order page includes an order button and a JavaScript event handler for the order button's "on click" event.

The JavaScript event handler causes a new browser window to be spawned and causes the new window to be loaded with an id confirm page from the authorisation processor 500. The event handler then causes the customer's web browser to submit a CGI script URL to the web server 401 with the parameters "order=yes" together with the order id cookie.

The id confirm page includes a usemame input textbox, a password input textbox and a submit button. The customer fills in the usemame and password textboxes and clicks on the submit button. Clicking on the submit button causes the browser to submit the entered username and password to the authorisation processor with the URL of an CGI authorisation script at the authorisation processor and the order id cookie.

The CGI order processing script at the web server machine 400 processes the order, dividing it into a separate sub-order for each vendor involved. The details of the sub-orders, including order id, sub-order id, ordered items ids are then sent to the warehouse systems of the various vendors.

The CGI authorisation script checks the username and password against entries in a database of uses. If they are invalid, it sends a modified id confirm page, inviting the customer to re-enter their username and password.

If however they are valid, it sends an accepted page to the new window of the customer's browser, retrieves the customer's docking station id and stores it in association with the order id.

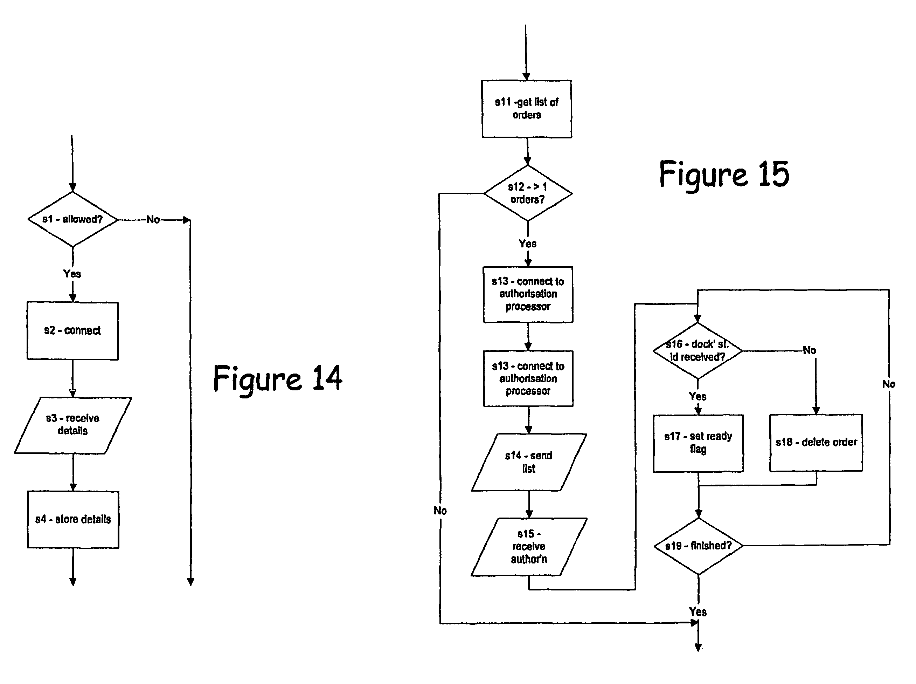

Referring to Figure 14, at the warehouse system, the order receiving process 305 monitors a designated TCP/IP port for attempts at connection from the order processing script at the web server machine 400. When such an attempt is made, the order receiving process 303 performs a security check on the host attempting to connect (step s1) and, if the host is allowed to connect on the designated port, a connection is established (step s2) and the order processing script sends the details of an order (step s3) which are then stored in the database 304 by the order receiving process 305 (step s4).

The first stage of the preparations for delivery from a warehouse is the checking of orders received from market web server machine 400. Referring to Figure 15, the order authorising process 309 obtains a list of order ids, for which no docking station id has been obtained, from the database 304 (step s11). If the list has at least one member (step s 12), it connects to a designated TCP/IP port on the authorisation processor 500 (step s13) and then sends the list to the custom server 502 (step s14). The custom server 502 of the authorisation processor 500 then retrieves the relevant docking station ids and delivery addresses from a local store and sends them to the order authorising process 309 in association with the order ids. If the order id cannot be found by the custom server 502, it sends null data fields back to the order authorising process 309 (step s15). The order authorising process 309 updates the database 304 with the data for each order id (step s19) from the authorisation processor 500, flagging the orders as being ready for delivery (step s17), if a docking station id has been received (step s16) and deleting records (step s18) where a docking station id was not received. The deletion of orders is logged.

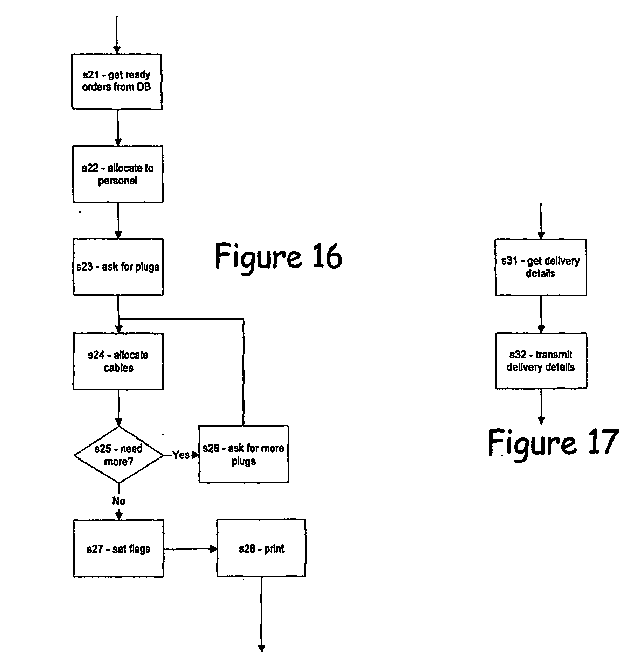

The cable allocation process 306 is periodically run. Referring to Figure 16, this process reads the orders, which are flagged "ready for delivery" from the database 304 (step s21) and allocates them to delivery personnel according to their delivery addresses (step s22). The operator is then invited to insert the plugs 67 of cables 66 into the plug reader 301 (step s23). The allocation process 306 then reads the chips in the plugs and allocates the cables 66, identified by their chip codes, to orders (step s24) and prints out (step s28) an inventory for each cable 66 and its delivery address. The print out is then attached by a worker to the appropriate cable 66 which is then taken and used to hold closed one or more containers 1 which are filled with the items listed in the inventory. The operator may be invited to insert further plugs (step s26), if there are more orders to be processed than sockets in the chip reader 301 (step s25). After allocating a cable 66 an order, the cable allocation process 306 clears the "ready for deliver" flags for the orders for which cables 66 have been allocated and sets a "being delivered" flag in the database for each order (step s27).

After the cable allocation process 306 has been run, the communicator load process 307 is run. Referring to Figure 17, when this process is being run, a delivery person ("the deliverer") presents their communicator 200 to the IR transceiver 302 attached to the personal computer 300. Ensuring that the communicator 200 is switched on, the deliverer presses the load key 203a on the keypad 203 of the communicator 200 which sends an IR signal containing the deliverer's id to the IR transceiver 302 which passes it on to the personal computer 300. The communicator load process 307 then retrieves the docking station ids and cable ids for each order that deliverer is to deliver and the cable ids of cables are located already at the delivery sites (step s31) and transmits this data to the communicator 200 (step s32) via the IR transceiver 302.

The deliverer's vehicle is loaded with the filled containers 1 which are attached to the cables 66, whose ids have been loaded into the deliverer's communicator 200, and when the deliverer's communicator has been programmed, the deliverer starts on their round.

When the deliverer arrives at a delivery address, the deliverer unloads the container or containers 1 to be delivered there and approaches the docking station 8. The deliverer presses the on/off button on the docking station 8 to activate it. The deliverer then directs their communicator 200 at the docking station's IR port and presses the login key 203d on the communicator 200 which causes the communicator 200 to send a vendor id, pre-programmed into the communicator 200. The docking station 8 responds with its id and the communicator 200 then sends the cable ids of the cables 66, attached to the containers 1 to be delivered, and the ids of the cables 66 known to be at the present delivery site to the docking station 8.

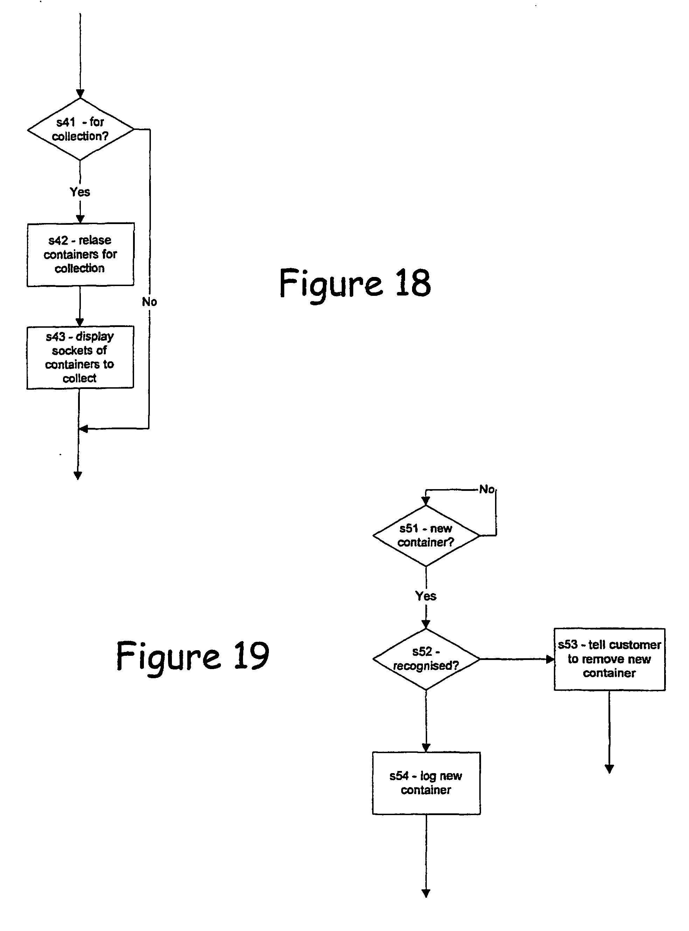

Referring to Figure 18, the docking station 8 determines whether any containers 1 are to be collected by the deliverer on the basis of the cable ids for cables 66 known to be at the delivery site, received from the communicator 200, and the ids of the cables 66 plugged into it (step s41). If this is the case, the docking station 8' releases the latches 87a, 87b, 87c of the sockets 80a, 80b, 80c into which the cables 66 of containers 1 to be retrieved are plugged (step s42). If containers 1 are to be retrieved by the deliverer, the docking station 8' identifies which plugs 67 are to be removed on its display 72 (step s43).

The deliverer unplugs any containers 1 to be retrieved and then plugs in the cables 66 of the container or containers 1 to be delivered. Referring to Figure 19, the docking station 8 constantly polls the sensors 85a, 85b, 85c and when a newly plugged in cable 66 is detected (step s51), the docking station 8 determines whether its id matches one of those received from the communicator 200 (step s52) and, if so, it logs its presence in association with the vendor id received from the communicator 200 (step s53). If the cable id does not match one received from the communicator 200 (step s52), the docking station 8 tells the deliverer to remove it by displaying a message on the display 72 (step s54). This message remains on the display until all offending cables 66 have been removed. If the deliverer is instructed to remove a cable 66, the deliverer can then get the correct container 1 from the delivery vehicle, if it is available. If a recognised plug 67 is removed, the log entry for it is deleted.

Referring to Figure 20, if the containers are all recognised by the docking station 8, the deliverer can direct the communicator 200 at the docking station 8 and press the logoff key 203e to terminate the delivery procedure. When the logoff signal is received from the communicator 200, and all of the cables 66, which are plugged in, are recognised, the docking station 8 closes the latch 87a, 87b, 87c of any socket 80a, 80b, 80c which has just received a plug 67 to lock the or each plug 67 in its socket 80a, 80b, 80c.

The docking station 8' then transmits its id and the ids of containers 1 that have been delivered and those that have been retrieved, together with respective returned goods flags set to indicate whether goods are being returned in a retrieved container 1, to the communicator 200 which stores this information for downloading to the warehouse system. Furthermore, the docking station 8 sends a list of the last twenty cable transactions in encrypted form to the communicator 200. When this data transfer is complete, the docking station 8 informs the deliverer that the delivery operation is complete using the display 72. The deliverer then switches off the docking station 8 using the on/off switch 71. However, if the deliverer forgets to switch off the docking station 8, it will power down automatically after a set period, e.g. 1 min.

On returning to the warehouse, the deliverer again presents the communicator 200 to the personal computer 300, which is now running the report receiving process 308, and presses the report key 203c on the communicator 200. The communicator 200 then sends the deliverer's id, the ids of the delivered containers and the ids of retrieved containers to the personal computer 300, together with the associated docking station ids, returned goods flags and the encrypted data. The personal computer 300 updates the records of the orders delivered by the deliverer to indicate that they have been delivered, its records of any orders for which there are returned goods and its records of the whereabouts of the containers 1 delivered and retrieved. The encrypted data is periodically sent to the docking station and cable provider to provide an audit trail so that the docking station provider can check that the correct licence fees are being paid by vendors using the system.

When the customer returns, the customer switches on the docking station 8 and places their chip card 1000 against the chip card reader 73. This causes the docking station 8 to display a request for the customer to enter a PIN number. The customer then enters the PIN number using the keys 75, ..., 78 of the keypad 79 to select digits displayed on the display 72. If the PIN is correct, the docking station releases all of its electromechanical latches 87a, 87b, 87c so that the owner can remove any plugs 67. Once a plug 67 has been removed, it can be drawn through the loops of the hasps 62 of the or each container 1, which it is holding closed, so that the customer can remove the items in the or each container 1.

The docking station 8 detects the removal of plugs 67 and logs the fact that the cables 66 attached thereto have been removed.

In order to return empty containers, the customer merely switches on the docking station 8 and inserts the plug 67 of the container 1 to be returned into a free socket 80a, 80b, 80c. The docking station 8 detects the insertion of a plug 67 and reads the plug's chip to determine whether it is one that has previously been delivered and removed by the customer. If it is recognised, the docking station 8 closes the latch 87a, 87b, 87c of the socket 80a, 80b, 80c into which the plug 67 has been inserted. If the container 1 is not recognised, the customer is instructed to remove the plug by a message on the docking station's display 72.

Referring to Figure 21, in order to return goods in a container 1, the customer places their chip card 1000 against the card reader 73 and enters their PIN number. The customer then inserts the plug 67 of the or each cable 66, attached to containers 1' to be returned, into a respective socket 80a, 80b, 80c. The docking station 8 detects the or each plug 67 being inserted (step s61) and checks that it is attached to a cable 66 has previously been inserted by a deliverer and removed by the customer (step s62). If it is not recognised, the customer is instructed to remove the plug 67 by a message on the display 72 (step s63). However, if the cable 66 is recognised, the docking station 8 invites the customer to indicate whether goods are being returned by a message on the display 72 (step s64). If no such indication is given before the next plug 67 is inserted, the docking station 8' determines that goods are not being returned in the present container 1. However, if the customer does indicate that goods are being returned using the keypad 79 (step s65), the docking station 8 logs this fact for communication to the deliverer's communicator 200 when the container 1 is collected (step s66).

A second embodiment will now be described.

In this embodiment, the docking station 8 is physically identical to that described above, except that the electromechanical latches 87a, 87b, 87c are self-locking. That is, a plug 67 can be inserted and will be retained when the docking station 8 is not switched on. The controlling software is also different from that of the docking station 8 described above. These differences will become apparent from the following description. Also, the communicator 200 is replaced by a conventional handheld computer, such as a PocketPC device or a Palm V, which has an infrared port. The handheld computer 1200 is programmed with a database of customers which includes customer names and ids and the locations of the docking stations 8 at the customers' premises. The customer's address is not included for security.

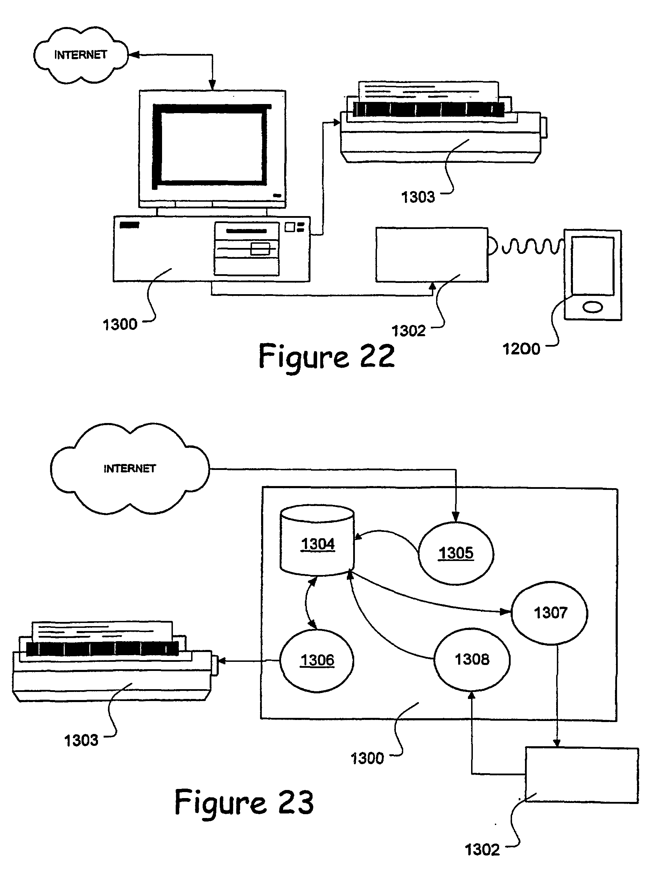

Referring to Figure 22, a warehouse system comprises a personal computer 1300 connected to an IR transceiver 1302 and a printer 1303. The personal computer 1300 is also connected to the Internet and is programmed for administering the delivery of orders to users. For this purpose, it can receive data from handheld computers 1200 via the IR transceiver 1302. The personal computer 1300 can also transmit data to the handheld computer 1200 via the IR transceiver 1302.

Referring to Figure 23, the personal computer 1300 supports a database 1304 for storing order data and miscellaneous administrative information such as docking station battery levels and the operational statuses of docking stations, an order receiving process 1305 for receiving orders via the Internet from a vendor web site (not shown) and storing them in the database 1304, a order dispatching process 1306 for printing out inventories and delivery details for containers 1, a download process 1307 for downloading data to handheld computers 1200 and a report receiving process 1308 for receiving delivery reports from handheld computers 1200.

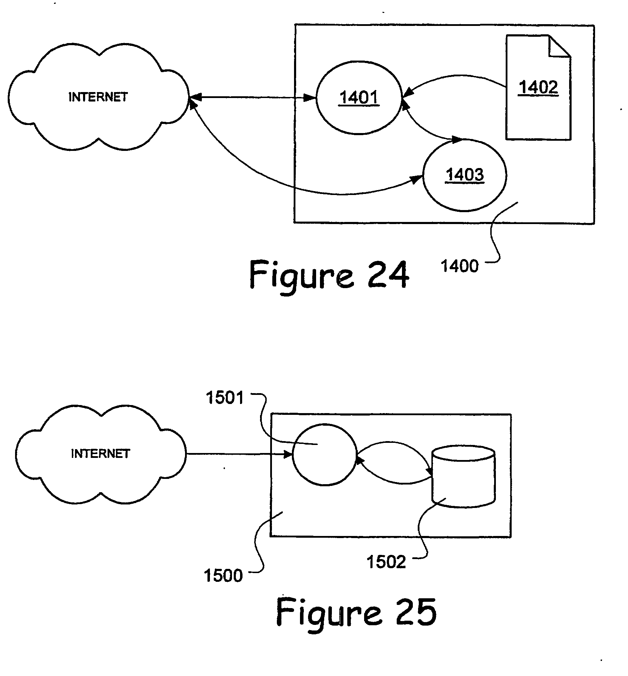

Referring to Figure 24, a vendor web server machine 1400 supports a web server process 1401, such as Apache or Microsoft IIS, and associated resources including HTML documents and/or ASP, JSP or PHP documents 1402 and CGI programs 1403. The resources 1402 and the CGI programs 1403 provide the web server machine 1400 with conventional e-commerce functions, e.g. filling of a virtual shopping cart with items, credit card processing etc..

Referring to Figure 25, a customer processor 1500 comprises an http server 1501, including associated resources for generating HTML documents dynamically, and a RDBMS (relational database management system) 1502.

The operation of the docking station 8, a handheld computer 1200, the warehouse system, the vendor web server machine 1400 and the customer processor 1500 will become more fully apparent from the description of the processing of an order given below.

In order to take advantage of the system of the present embodiment, a customer must register so as to obtain a docking station 8 and to provide personal information required for effecting transactions.

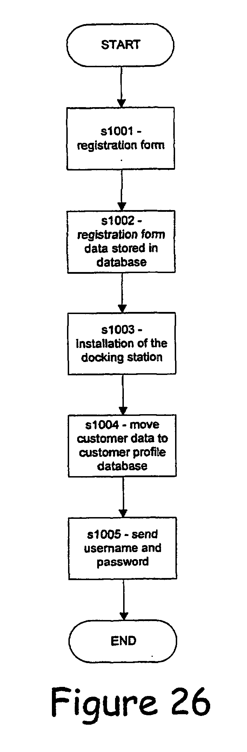

Referring to Figure 26, a prospective customer uses a web browser to visit the web site provided by the customer processor 1500 and fills in a registration form (step s1001). The registration form has inputs for receiving name and address information, details of one or more payment card and a preferred time for installation of a docking station 8. The form data is stored in a prospective customer database in the RDBMS 1502 and arrangements are made for the installation of the docking station 8.

During installation of the docking station (step s1003), the customer is provided with a chip card 1000 for releasing cables from the docking station. The installation process also involves the transfer of a customer id to the docking station 8 from a handheld computer 1200. The process would also be used in the case of a new customer taking over a docking station from the an existing customer who has moved to another address.

After installation of the docking station 8 (step s1003), the customer's data is moved within the RDBMS 1502 to a customer profile database (s1004). At the same time, a link is made between the id of the new customer's chip card 1000 and their record in the customer profiles database. The new customer is sent a username and password pair (step s1005), which they can use to access the customer processor, by email or post.

The new customer can use the username and password to log into the customer processor web site and review and change elements of their profile. The items making up a profile may change over time as vendors specify new items of information to be provided and, whenever the customer views their profile, they will see the current set of items required by the totallity of the vendors using the system and have an opportunity to add values for newly created items.

The process of the ordering and delivery of goods will now be described for a customer who has a docking station 8 mounted to a wall of their premises.

In order to place an order, the customer uses a web browser to view the vendor web site provided by the vendor web server machine 1400.

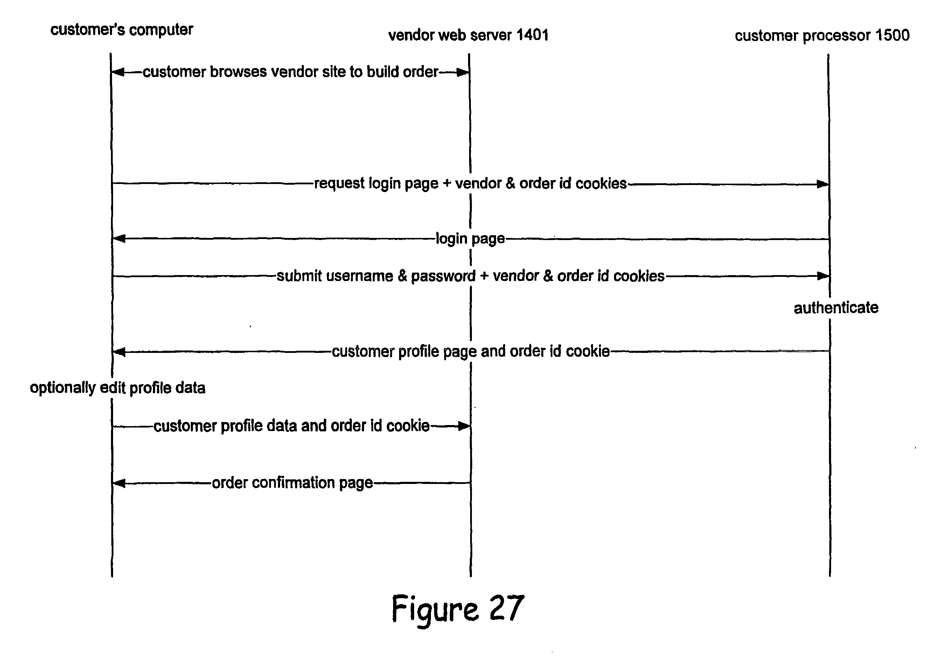

Referring to Figure 27, the customer browses the pages available at the vendor web server machine 1400 adding items to a "shopping cart" in the conventional manner. When the customer has added all the items that the customer wishes to purchase to the "shopping cart", the customer requests an order page from the vendor web server 1401. The order page is accompanied by a cookies identifying the vendor and containing a unique order id. The order page includes an order button image which is associated with a link to a login page at the customer processor web server 1501 and the cookies are configures such that they will be sent with all requests to the customer processor web server 1501.

If the user is to make use of the customer processor 1500 to provide payment and delivery details to the vendor of the ordered goods, the user clicks on the button image which cases a request for the login page of the customer processor web server 1501. The customer processor web server 1501 responds with the login page. The customer completes the login form and submits it.

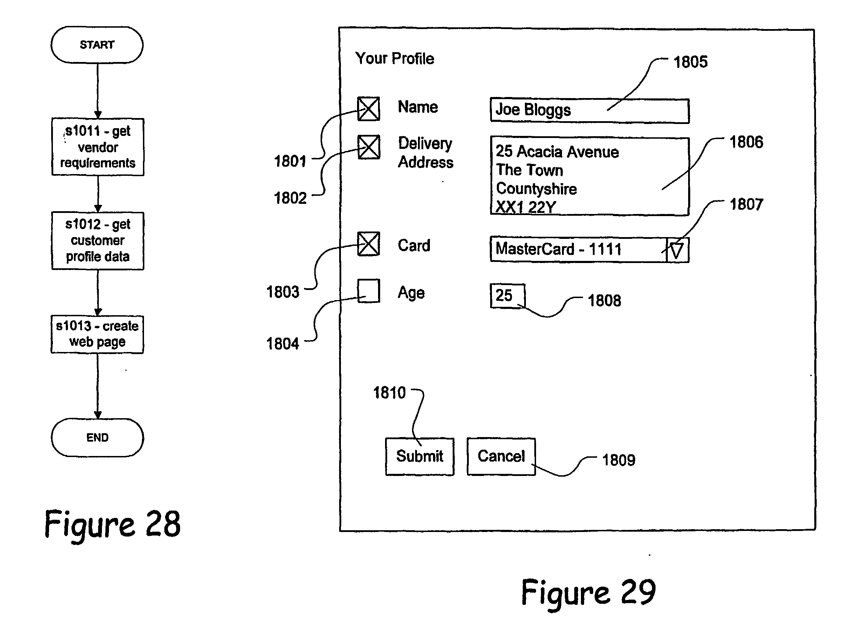

Referring to Figure 28, assuming that the user has entered a valid username and password pair, a CGI process at the customer processor web server 1501 queries a vendors database in the RDBMS 1502 to obtain a list of customer profile data items which are mandatory and preferred for transactions (step s1011). Mandatory items include customer name and billing address and payment card details. Preferred items might include the customer's email address and age. The customer's data for these items are then obtained from the customer profile database (s1012). This information is then used to generate a web page in which it is displayed and which is sent to the customer's browser (step s1013).

Each vendor has access to the RDBMS 1502 via a secure web interface so that they can select and/or create the personal profile data items which they desire to receive and specify them as mandatory or preferred.

Referring to Figure 29, an example customer profile web page includes 4 items, name, delivery address, payment card and age. A respective checkbox 1801, 1802, 1803, 1804 is provided for each item. The checkboxes are checked by default. The name item is displayed in an input 1805 of type text which means that the customer can edit it. The delivery address item is displayed in a textarea 1806 and can also be edited. The payment card item is displayed using a select element 1807. The select element 1807 contains a list of the customer's payment cards which are identified by their type and the last 4 digits of their numbers. The full card information for each payment card which the customer has added to their profile, including card holder's name and billing address and postal code, are embedded in the page such that they are accessible to JavaScript contained in the page. Finally, the age item is displayed in another input 1808 of type text.

If a customer's profile had not included data for an item wanted by the vendor, an empty form element would have been provided in the customer profile page so that the customer could enter a value for it.

In the present example, it can be seen that the customer has unchecked the checkbox 1804 associated with the age item.

If the customer decides not to proceed at this point, the customer can click on a cancel button 1809. This causes a request to be sent to the vendor web server 1401 which enables the vendor web server 1401 to terminate the customer's session and send back a cancellation confirmation page.

If the customer decides to proceed with the order, the customer clicks on a submit button 1810. This action triggers a JavaScript function that builds an http request using the post method which includes data for each of the items associated with a checked checkbox. In the present example, the data sent comprises the name, the delivery address and the payment card number, expiry date, holder's name and billing address for the selected payment card. This data is received by the vendor web server 1401 which validates it. If the data is valid, for instance age was not a mandatory item, the vendor web server 1401 responds with an order confirmation page. If the data is not valid, the vendor web server 1401 sends a pages requesting correction of the invalid data or supply of mandatory but missing data as necessary.

After completion of the order process, the vendor web server machine 1400 commuicated to order to the warehouse system.

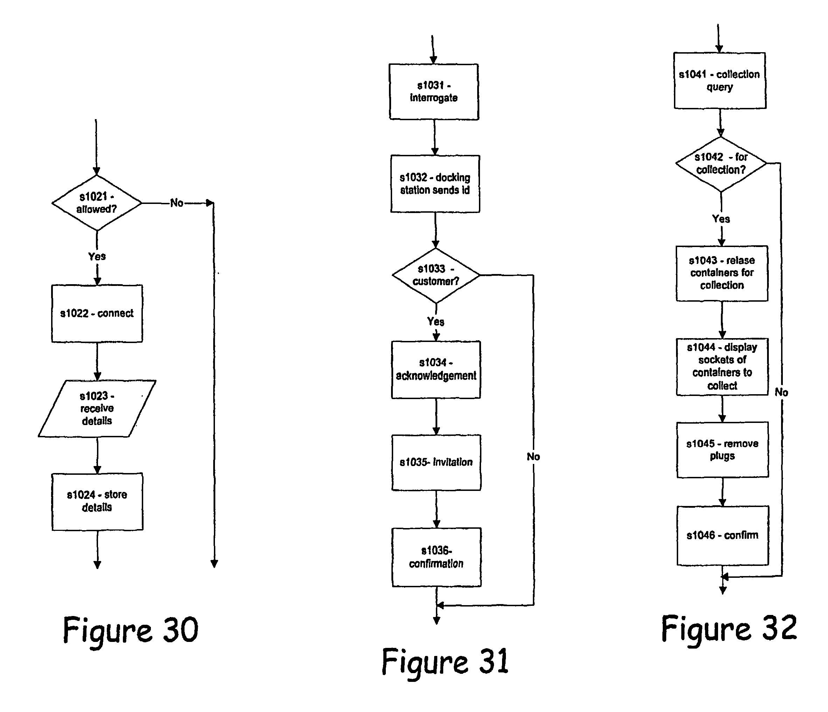

Referring to Figure 30, at the warehouse system, the order receiving process 1305 monitors a designated TCP/IP port for attempts at connection from the order processing program at the vendor web server machine 1400. When such an attempt is made, the order receiving process 1303 performs a security check on the host attempting to connect (step s1021) and, if the host is allowed to connect on the designated port, a connection is established (step s 1022) and the order processing program sends the details of an order (step s1023) which are then stored in the database 1304 by the order receiving process 1305 (step s1024).

Referring to Figure 23, orders are periodically allocated to deliverers by the order dispatching process 1306. Each deliverer is responsible for a different geographical area and the order dispatching process 1306 allocates orders to different deliverers according to their delivery addresses. When the order dispatching process 1306 has allocated the orders, it prints out container loading instructions for warehouse staff and destination labels to be attached to the loaded boxes. When the loading instructions have been printed, the order dispatching process 1306 marks the records for each corresponding order record in the database 1304 to show that the order has been processed.

Deliverers updates the data held in their handheld computers 1200 before each delivery round by presenting their handheld computer 1200 to the IR transceiver 1302 and running a data download program on the handheld computer 1200. The the data download program causes the personal computer 1300 to run the download process 1307 which transfers the transaction ids for which containers 1 should be collected, customer database updates, the ids of disabled docking stations 8 and docking station battery levels. It will be appreciated that other data may also be downloaded.

Warehouse staff load containers 1 according to the printed instructions, attach the destination labels and place the boxes 1 for collection by the relevant deliverer's vehicle.

A deliverer's vehicle is loaded with the allocated filled containers 1 and the deliverer starts on their round.

Referring to Figure 31, when the deliverer arrives at a delivery address, the deliverer unloads the container or containers 1 to be delivered there and sufficient cables 66, and approaches the docking station 8. The deliverer presses the on/off button on the docking station 8 to activate it. The deliverer then runs a delivery program on their handheld computer 1200 and "clicks" on an interrogate button displayed on the handheld computer's screen while directing the handheld computer's IR port at the docking station's IR port (step s1031). This causes the docking station 8 to send its id to the the handheld computer 1200 (step s1032). The handheld computer checks this against the customer ids in its database and displays the relevant customer's details (step s1033). It will be appreciated that the id of a docking station is, in this example, the same as the id of the associated customer and was programmed into the docking station 8 when the associated customer took it over either from another customer or at installation. Of course, if the docking station 8 is not associated with a customer of the deliverer, the handheld computer 1200 will display a customer not found message and the deliverer will known that they are not at the correct docking station 8.

If a customer is found, the handheld computer 1200 send an acknowledgement which comprises the customer's id (step s1034). If docking stations are able to be associated with more than one customer, the deliverer may have to select the appropriate customer on the basis of the delivery information printed at the warehouse.

On receipt of the acknowledgement, the docking station 8 invites by means of a message back to the handheld computer 1200 or a message displayed on its display 72, the deliverer to plug a cable 66, attached to the container 1 being delivered, into one of its sockets 80a, 80b, 80c (step s1035). When the cable 66 has been plugged in, the docking station locks the plug 67 in the socket, reads the id of its plug 67 and transmits this to the handheld computer 1200 together with a delivery confirmation code (step s1036).

Referring to Figure 32, in order to carry out a collection, the deliverer "clicks" on a collection button displayed on the handheld computer 1200. This causes the handheld computer 1200 to send a collection query signal including the deliverer's id to the docking station (step s1041). The docking station 8 determines whether any containers 1 are to be collected by the deliverer on the basis of the vendor id from the handheld computer 1200, the ids of the cables 66 plugged into it and whether these cables have been removed by the customer (step s1042). If one of more containers 1 are to be collected by the deliverer, the docking station 8 releases the latches 87a, 87b, 87c of the sockets 80a, 80b, 80c into which the cables 66 of containers 1 to be retrieved are plugged (step s1043). The docking station 8 identifies which plugs 67 are to be removed on its display 72 (step s1044).

The deliverer unplugs any plugs 67 attached to containers 1 to be retrieved (step s1045) and, when the plugs have been removed confirms the collections with the handheld computer 1200 by sending the ids of the removed plugs together with the associated returned goods flag states (step s1046). The returned goods flag is explained below.

When the delivery and/or collection have been completed, the deliverer then switches off the docking station 8 using the on/off switch 71. However, if the deliverer forgets to switch off the docking station 8, it will power down automatically after a set period, e.g. 1 min.

On returning to the warehouse, the deliverer presents the handheld computer 1200 to the IR transceiver 1302 and runs a reporting program which causes the personal computer to run the report receiving process 1308. The handheld 1200 then sends the deliverer's id, the ids of the used cables 66 and the ids of retrieved cables 66 to the personal computer 1300, together with the associated docking station ids and returned goods flags. The personal computer 1300 updates the records of the orders delivered by the deliverer to indicate that they have been delivered and adds the id's of the cables 66 used for the order, its records of any orders for which the container has been retrieved and whether there are returned goods. Orders for which containers have been returned are identified using the cable ids recorded when they were delivered.

The functions of the reporting and download programs of the handheld computer 1200 are conveniently performed by a single program.

When the customer returns, the customer switches on the docking station 8 and places their chip card 1000 against the chip card reader 73. The docking station releases all of its electromechanical latches 87a, 87b, 87c so that the owner can remove any plugs 67. Once a plug 67 has been removed, it can be drawn through the loops of the hasps 62 of the or each container 1, which it is holding closed, so that the customer can remove the items in the or each container 1.

The docking station 8 detects the removal of plugs 67 and logs the fact that the cables 66 attached thereto have been removed.

In order to return empty containers, the customer merely inserts the plug 67 of the container 1 to be returned into a free socket 80a, 80b, 80c where it is locked in place by the associated latch 87a, 87b, 87c. When next switched on by the customer, the docking station 8 detects the insertion of a plug 67 and reads the plug's chip.

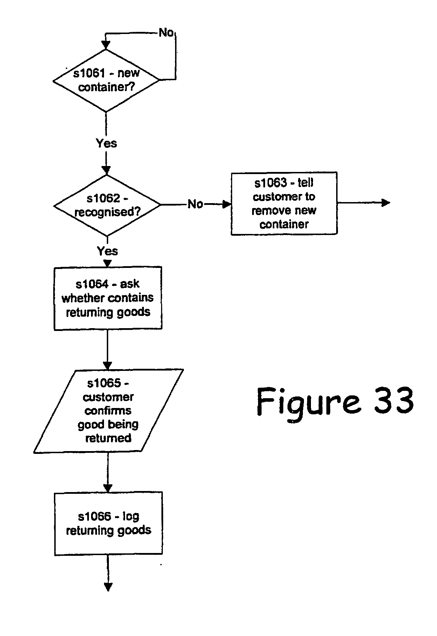

Referring to Figure 33, in order to return goods in a container 1, the customer places their chip card 1000 against the card reader 73. The customer then inserts the plug 67 of the or each cable 66, attached to containers 1 to be returned with goods, into a respective socket 80a, 80b, 80c. The docking station 8 detects the or each plug 67 being inserted (step s1061) and invites the customer to indicate whether goods are being returned by a message on the display 72 (step s1062). If indication is given before the next plug 67 is inserted, the docking station 8 determines that goods are not being returned in the present container 1. However, if the customer does indicate that goods are being returned using the keypad 79 (step s1063), the docking station 8 logs this fact for communication to the deliverer's communicator 200 when the container 1 is collected (step s1064).

It will be appreciated that many modifications may be made to the embodiments described above without departing from the spirit and scope of the claims appended hereto. For instance, orders need not be placed via the Internet and may be made by telephone, by post or by any other means.

The docking station 8 may be Bluetooth enabled to allow it to communicate directly with the warehouse system via a Bluetooth enabled mobile phone carried by the deliverer, rather than the delivery details having to be loaded into a portable communicator.

The docking station 8 may be provided with communication means, e.g. a mobile phone or an Internet connection, for informing a customer that a delivery has been made.

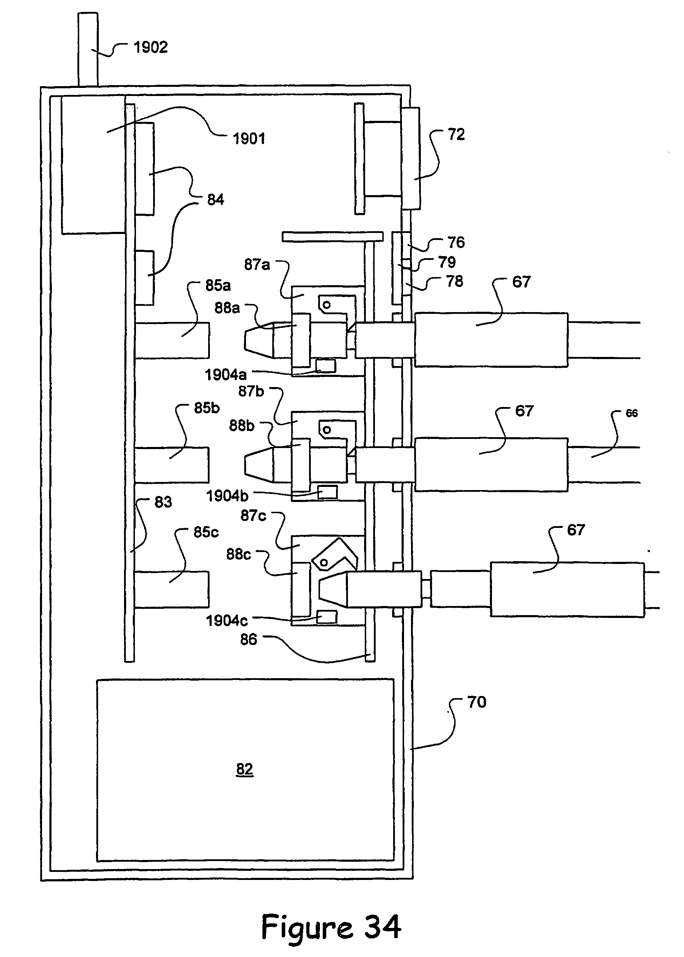

Referring to Figure 34, the docking station of Figure 3, 4 and 6 is modified to include a GSM mobile phone module 1901 and an associated antenna 1902 and occupied socket sensors 1904a, 1904b, 1904c.

The GSM mobile phone module 1901 can be controlled by the docking station's microcontroller for sending and receiving SMS messages. The microcontroller is programmed to send SMS messages when the docking station's battery is low, in the event of no customer activity for an extended period and in the event of an assault on the docking station, determined by suitable sensors which are also provided. The microcontroller is also programmed to respond to predetermined SMS messages to deactivate the docking station.

The occupied socket sensors 1904a, 1904b, 1904c detect when a socket is occupied and are polled by the microcontroller 100 when it polls the three induction sensors 85a, 85b, 85c. If a occupied socket sensor 1904a, 1904b, 1904c indicates that socket is occupied but the corresponding induction sensor 85a, 85b, 85c does not provide an id from a plugs 67a, 67b, 67c, the microcontroller 100 determines that there is an error condition and displays a warning message to a deliverer. The error condition may be a fault in an induction sensor 85a, 85b, 85, a faulty plug or a foreign body inserted into a socket 80a, 80b, 80c.

In a further embodiment, the occupied socket sensors are employed in a docking station as shown in Figure 3 which does no include a GSM mobile phone module.

Still further, the docking station 8 may be combined with an entryphone system.

Still further, the docking station 8 may have a plurality of ids, each associated with a different customer. The docking station 8 would then only release plugs associated with the relevant customer when a customer inputs their id. Consequently, one docking station could be shared between the occupants of an apartment block.

In the foregoing examples, the control electronics and the locking devices are housed in a common unit. It is to be understood that the control electronics may be remote from the locking devices and that the terms "docking station", "anchoring fixture" etc. encompass such arrangements.

The docking station 8 may be provided with an alarm system that passes a current along a wire running from the plug end of each cable 66 to the other and back. If a cable 66, plugged into the docking station 8 is cut, the current in the wire stops flowing and the alarm is activated.

## Claims

1. An anchoring fixture for a delivery point, the anchoring fixture comprising:
a body (70);
fastening means for securely fastening the body to a substantially immovable structure;
a socket (80a), including an electrically operated locking means (87a) for receiving and locking a plug (67) therein;
input means (73, 79, 101) for inputting identity signals; and
control means (100) configured to operate said locking means (87a) to release a plug (67), received within said socket (80a), in dependence on identity signals, input using the input means (73, 79, 101), **characterised by** plug id detecting means (85a), associated with said socket (80a), for detecting a machine readable id carried by a plug (67), adapted to be received by said socket (80a),
wherein the control means (100) is configured to lock a plug (67) in said socket in response to input of a deliverer id using the input means (73, 79, 101), release a plug (67) from said socket (80a) in response to input of a recipient id using the input means (73, 79, 101), and to release a plug (67) from said socket (80a) in response to input of a deliverer id using the input means (73, 79, 101).

2. An anchoring fixture according to claim 1, wherein the control means (100) is configured to release a plug (67) from said socket (80a) in response to a deliverer id using the input means (73, 79, 101), only if that plug (67), as determined by its id detected by the plug id detecting means (85a), has previously been released from said socket (80a) in response to input of a recipient id.

3. An anchoring fixture according to claim 1 or 2, wherein the control means (100) is configured to lock a plug (67) in said socket (80a) in response to input of a deliverer id using the input means (73, 79, 101), only if the id of the plug (67) has been input using the input means (73, 79, 101).

4. An anchoring fixture according to claim 1, 2 or 3, including a transmitter (101), wherein the control means is configured to output information, relating to a plug (67) that has been released from said socket (80a) in response to input of a deliverer id, using the transmitter (101).

5. An anchoring fixture according to claim 4, wherein the transmitter (101) is an infrared transmitter.

6. An anchoring fixture according to claim 4 or 5, wherein the control means (100) is responsive to the input means (73, 79, 101) to record that items for collection are connected to a plug (67) in said socket (80a) and said information comprises whether items for collection are connected to the plug (67).

7. An anchoring fixture according any preceding claim, wherein the input means (73, 79, 101) comprises a chip card reader (73) for inputting a receiver id.

8. An anchoring fixture according to claim 7, wherein the input means (73, 79, 101) further comprises keys (79) for inputting a PIN for confirming a recipient id.

9. An anchoring fixture according to any preceding claim, wherein the input means (73, 79, 101) comprises a receiver (101) for receiving a deliverer id.

10. An anchoring fixture according to claim 9, wherein the receiver (101) is an infrared receiver.

11. An anchoring fixture according to any preceding claim, including:-
a plurality of sockets (80a, 80b, 80c), each including an electrically operated locking means (87a, 87b, 87c), for receiving and locking a respective plug therein;
input means (73, 79, 101) for inputting identity signals;
control means (100) configured to operate said locking means (87a, 87b, 87c) to release plugs, received within said sockets (80a, 80b, 80c), in dependence on identity signals, input using the input means (73, 79, 101); and
plug id detecting means (85a, 85b, 85c), associated with each socket (80a, 80b, 80c), for detecting an id carried by a plug (67), adapted to be received by said sockets (67),
wherein the control means (100) is configured to lock a plug (67) in one of said sockets (80a, 80b, 80c) in response to input of a deliverer id using the input means (73, 79, 101), release a plug (67) from one of said sockets (80a, 80b, 80c) in response to input of a recipient id using the input means (73, 79, 101), and to release a plug (67) from one of said sockets (80a, 80b, 80c) in response to input of a deliverer id using the input means (73, 79, 101), if that plug (67), as determined by its id detected by the plug id detecting means (85a, 85b, 85c), has previously been released from one of said sockets (80a, 80a, 80c) in response input of a receiver id.

12. A delivery system including an anchoring fixture (8) according to any preceding claim and a handheld device (200) for communicating with the anchoring fixture (8).

13. A delivery system according to claim 12, wherein the handheld device (200) is configured for inputting a deliverer id to said input means (73, 79, 101).

14. A delivery system according to claim 12 or 13, wherein the anchoring fixture (8) includes a transmitter (101) and the control means (100) is configured to communicate information, relating to a plug (67) that has been released from one of said sockets (80a) in response to input of a deliverer id, to said handheld device (200) using the transmitter (101).

15. A delivery system according to claim 14, wherein the transmitter (101) is an infrared transmitter.

16. A delivery system according to claim 14 or 15, wherein the control means (100) is responsive to the input means (73, 79, 101) to record that items for collection are connected to a plug (67) in one of said sockets (80) and said information comprises whether items for collection are connected to the plug (67).

17. A method of delivering an item, the method comprising:
receiving an order for an item;
transporting said item and an attachment element (66), provided with a plug (67) to a delivery site;
attaching said item to an anchoring fixture (8) by plugging the plug (67) into a socket (80a) in said anchoring fixture (8);
**characterised by**
transmitting a machine-readable id of said plug (67) and an anchoring fixture id from the anchoring fixture (8) to a handheld device (200);
locking said plug (67) in said socket (80a); and
transmitting a deliverer id from said handheld device (200) to said anchoring fixture (8) and validating said deliverer id,
wherein locking of said plug (67) in said socket (80a) is dependent on the validity of said deliverer id.

18. A method according to claim 17, including transmitting said plug id and anchoring fixture id to an order administration system (300, 301, 302, 303) and storing said plug id in said system (300, 301, 302, 303) in association with a record of said anchoring fixture (8).

19. A method of delivering an item, the method comprising:-
receiving an order for an item;
allocating an attachment element (66) to the item and to a delivery site
transporting said item and said attachment element (66), provided with a plug (67), to the delivery site; and
attaching said item to an anchoring fixture (8) by plugging the plug (67) into a socket (80a) in said anchoring fixture (8);
**characterised by**
the plug (67) having a machine readable id;
transmitting the id of the plug (67) to the anchoring fixture (8) at the delivery site;
reading of the id of the plug (67) by the anchoring fixture (8);
comparing the transmitted id and the id read from the plug (67) in the anchoring fixture (8); and
automatically locking the plug (67) in the anchoring fixture (8) if the transmitted id and the id read from the plug (67) match.

20. A method according to claim 17, 18 or 19, including inputting a recipient id into the anchoring fixture (8), checking the recipient id in the anchoring fixture, and releasing the plug if the recipient id checks out.

21. A method according to claim 21, wherein the recipient id is input by reading data from a chip card (1000).

22. A method according to claim 22, wherein the recipient id is further input by means of manual input of a PIN.

23. A method according to any one of claims 17 to 22, including plugging the plug (67) back into the anchoring fixture (8) and locking the plug (67) in the anchoring fixture.

24. A method according to claim 23, including inputting an indication that a returning item is attached to the plug (67) when it has been plugged back into the anchoring fixture (8).

25. A method according to claim 23 or 24, including inputting a deliverer id into the anchoring fixture (8) when inserting a plug attached to an item being delivered, subsequently inputting a deliverer id and releasing the plug (67), when it has been plugged back into the anchoring fixture (8), if the subsequently input deliverer id matches that input when the plug (67) was inserted attached to said item.

26. A method according to any one of claims 17 to 25, including transmitting details associated with plugs (67) plugged into the anchoring fixture (8) and plugs (67) unplugged from the anchoring fixture (8) by a deliverer from the anchoring fixture (8) to a portable device or said handheld device (200).

27. A method according to claim 26, including transmitting said details from the portable device to a delivery administration system.

## Patentansprüche

1. Eine Verankerungsvorrichtung für einen Lieferort, wobei die Verankerungsvorrichtung wie folgt beinhaltet:
einen Körper (70);
Befestigungsmittel, um den Körper sicher an einer im wesentlichen immobilen Struktur zu befestigen;
eine Dose (80a), die ein elektrisch funktionierendes Sperrmittel (87a) zum Aufnehmen und Sperren eines Steckers (67) darin enthält;
Eingabemittel (73, 79, 101) zum Eingeben von Identifikationssignalen; und
Kontrollmittel (100), die so konfiguriert sind, dass sie das Sperrmittel (87a) steuern, um einen Stecker (67), der in der Dose (80a) aufgenommen wird, in Abhängigkeit von Identifikationssignalen freizugeben, die mittels der Eingabemittel (73, 79, 101) eingegeben werden, **gekennzeichnet, durch** ein Stecker-ID-Erkennungsmittel (85a), das mit der Dose (80a) verbunden ist, um eine maschinenlesbare ID zu erkennen, die von einem Stecker (67) getragen wird, der so beschaffen ist, dass er von der Dose (80a) aufgenommen wird,
wobei das Kontrollmittel (100) so konfiguriert ist, dass es einen Stecker (67) in der Dose als Reaktion auf Eingabe einer Lieferanten-ID mittels der Eingabemittel (73, 79, 101) sperrt, einen Stecker (67) aus der Dose (80a) als Reaktion auf Eingabe einer Empfänger-ID mittels der Eingabemittel (73, 79, 101) freigibt, und einen Stecker (67) aus der Dose (80a) als Reaktion auf Eingabe einer Lieferanten-ID mittels der Eingabemittel (73, 79, 101) freigibt.

2. Eine Verankerungsvorrichtung gemäß Anspruch 1, wobei das Kontrollmittel (100) so konfiguriert ist, dass es einen Stecker (67) aus der Dose (80a) als Reaktion auf Eingabe einer Lieferanten-ID mittels der Eingabemittel (73, 79, 101) nur dann freigibt, wenn besagter Stecker (67), wie durch seine ID festgelegt, die durch das Stecker-ID Erkennungsmittel (85a) nachgewiesen ist, zuvor als Reaktion auf Eingabe einer Empfänger-ID aus der Dose (80a) freigegeben wurde.

3. Eine Verankerungsvorrichtung gemäß Anspruch 1 oder 2, wobei das Kontrollmittel (100) so konfiguriert ist, dass es einen Stecker (67) in der Dose (80a) als Reaktion auf Eingabe einer Lieferanten-ID mittels der Eingabemittel (73, 79, 101) nur dann sperrt, wenn die Stecker-ID (67) mittels der Eingabemittel (73, 79, 101) eingegeben wurde.

4. Eine Verankerungsvorrichtung gemäß Anspruch 1, 2 oder 3, die einen Transmitter (101) enthält, wobei das Kontrollmittel so konfiguriert ist, dass es Informationen ausgibt, die sich auf einen Stecker (67) beziehen, der aus der Dose (80a) als Reaktion auf Eingabe einer Lieferanten-ID, mittels des Transmitters (101), freigegeben wurde.

5. Eine Verankerungsvorrichtung gemäß Anspruch 4, wobei der Transmitter (101) ein Infrarot-Transmitter ist.

6. Eine Verankerungsvorrichtung gemäß Anspruch 4 oder 5, wobei das Kontrollmittel (100) auf die Eingabemittel (73, 79, 101) reagiert, um zu registrieren, dass Artikel zum Abholen mit einem Stecker (67) in der Dose (80a) verbunden sind, und besagte Informationen beinhalten, ob Artikel zum Abholen mit dem Stecker (67) verbunden sind.

7. Eine Verankerungsvorrichtung gemäß jedem vorangehenden Anspruch, wobei die Eingabemittel (73, 79, 101) einen Chipkartenleser (73) zum Eingeben einer Empfänger-ID beinhalten.

8. Eine Verankerungsvorrichtung gemäß Anspruch 7, wobei die Eingabemittel (73, 79, 101) außerdem Schlüssel (79) zum Eingeben einer PIN zur Bestätigung einer Empfänger-ID beinhalten.

9. Eine Verankerungsvorrichtung gemäß jedem vorangehenden Anspruch, wobei die Eingabemittel (73, 79, 101) ein Empfangsgerät (101) zum Empfangen einer Lieferanten-ID beinhalten.

10. Eine Verankerungsvorrichtung gemäß Anspruch 9, wobei das Empfangsgerät (101) ein Infrarot-Empfangsgerät ist.

11. Eine Verankerungsvorrichtung gemäß jedem vorangehenden Anspruch, die enthält:
eine Vielzahl von Dosen (80a, 80b, 80c), die jeweils ein elektrisch funktionierendes Sperrmittel (87a, 87b, 87c) enthalten, um einen jeweiligen Stecker darin aufzunehmen und zu sperren;
Eingabemittel (73, 79, 101) zum Eingeben von Identifikationssignalen;
Kontrollmittel (100), das so konfiguriert ist, dass es die Sperrmittel (87a, 87b, 87c) steuert, um Stecker, die in den Dosen (80a, 80b, 80c) aufgenommen wurden, in Abhängigkeit von Identifikationssignalen freizugeben, die mittels der Eingabemittel (73, 79, 101) eingegeben werden; und
Stecker-ID-Erkennungsmittel (85a, 85b, 85c), die mit jeder Dose (80a, 80b, 80c) verbunden sind, um eine ID festzustellen, die von einem Stecker (67) getragen wird, der so beschaffen ist, dass er von den Dosen (80a, 80b, 80c) aufgenommen wird,
wobei das Kontrollmittel (100) so konfiguriert ist, dass es einen Stecker (67) in einer der Dosen (80a, 80b, 80c) als Reaktion auf Eingabe einer Lieferanten-ID mittels der Eingabemittel (73, 79, 101) sperrt, dass es einen Stecker (67) aus einer der Dosen (80a, 80b, 80c) als Reaktion auf Eingabe einer Empfänger-ID mittels der Eingabemittel (73, 79, 101) freigibt, und dass es einen Stecker (67) aus einer der Dosen (80a, 80b, 80c) als Reaktion auf Eingabe einer Lieferanten-ID mittels der Eingabemittel (73, 79, 101) freigibt, wenn besagter Stecker (67), wie durch seine ID festgelegt, die durch die Stecker-ID-Erkennungsmittel (85a, 85b, 85c) nachgewiesen ist, zuvor aus einer der Dosen (80a, 80b, 80c) als Reaktion auf Eingabe einer Empfänger-ID freigegeben wurde.

12. Ein Liefersystem, das eine Verankerungsvorrichtung (8) gemäß jedem vorangehenden Anspruch und ein Handgerät (200) zum Kommunizieren mit der Verankerungsvorrichtung (8) enthält.

13. Ein Liefersystem gemäß Anspruch 12, wobei das Handgerät (200) zum Eingeben einer Lieferanten-ID in die Eingabemittel (73, 79, 101) konfiguriert ist.

14. Ein Liefersystem gemäß Anspruch 12 oder 13, wobei die Verankerungsvorrichtung (8) einen Transmitter (101) enthält, und das Kontrollmittel (100) konfiguriert ist, um Informationen, die sich auf einen Stecker (67) beziehen, der aus einer der Dosen (80a), als Reaktion auf Eingabe einer Lieferanten-ID, freigegeben wurde, an das Handgerät (200) mittels des Transmitters (101) zu übermitteln.

15. Ein Liefersystem gemäß Anspruch 14, wobei der Transmitter (101) ein Infrarot-Transmitter ist.

16. Ein Liefersystem gemäß Anspruch 14 oder 15, wobei das Kontrollmittel (100) auf die Eingabemittel (73, 79, 101) reagiert, um zu registrieren, dass Artikel zum Abholen mit einem Stecker (67) in einer der Dosen (80) verbunden sind, und die besagten Informationen beinhalten, ob Artikel zum Abholen mit dem Stecker (67) verbunden sind.

17. Ein Verfahren zur Lieferung eines Artikels, wobei dieses Verfahren wie folgt beinhaltet:
Erhalt einer Bestellung für einen Artikel;
Transport des besagten Artikels und eines Befestigungsteils (66), das mit einem Stecker (67) versehen ist, zu einem Lieferort;
Befestigen des Artikels an einer Verankerungsvorrichtung (8) durch Stecken des Steckers (67) in eine Dose (80a) in der Verankerungsvorrichtung (8);
**gekennzeichnet durch**
Übertragen einer maschinenlesbaren ID des Steckers (67) und einer Verankerungsvorrichtungs-ID von der Verankerungsvorrichtung (8) zu einem Handgerät (200);
Sperren des Steckers (67) in der Dose (80a); und
Übertragen einer Lieferanten-ID von dem Handgerät (200) zu der Verankerungsvorrichtung (8), und Bestätigen der Lieferanten-ID,
wobei das Sperren des Steckers (67) in der Dose (80a) von der Gültigkeit der Lieferanten-ID abhängig ist.

18. Ein Verfahren gemäß Anspruch 17, das das Übermitteln der Stecker-ID und der Verankerungsvorrichtungs-ID an ein Auftragsverwaltungssystem (300, 301, 302, 303) und das Speichern der Stecker-ID in dem besagten System (300, 301, 302, 303) in Verbindung mit einer Registrierung der Verankerungsvorrichtung (8) enthält.

19. Ein Verfahren zur Lieferung eines Artikels, wobei dieses Verfahren wie folgt beinhaltet:
Erhalt einer Bestellung für einen Artikel;
Zuteilen eines Befestigungsteils (66) an den Artikel und an einen Lieferort;
Transport des Artikels und des Befestigungsteils (66), das mit einem Stecker (67) versehen ist, zu dem Lieferort; und
Befestigen des Artikels an einer Verankerungsvorrichtung (8) durch Stecken des Steckers (67) in eine Dose (80a) in der Verankerungsvorrichtung (8);
**gekennzeichnet durch**
den Stecker (67) mit einer maschinenlesbaren ID;
Übertragen der ID des Steckers (67) an die Verankerungsvorrichtung (8) am Lieferort;
Auslesen der ID des Steckers (67) **durch** die Verankerungsvorrichtung (8);
Vergleichen der übertragenen ID und der aus dem Stecker (67) ausgelesenen ID in der Verankerungsvorrichtung (8); und
automatisches Sperren des Steckers (67) in der Verankerungsvorrichtung (8), falls die übertragene ID und die aus dem Stecker (67) ausgelesene ID übereinstimmen.

20. Ein Verfahren gemäß Anspruch 17, 18 oder 19, welches das Eingeben einer Empfänger-ID in die Verankerungsvorrichtung (8), das Überprüfen der Empfänger-ID in der Verankerungsvorrichtung, und das Freigeben des Steckers enthält, wenn sich die Empfänger-ID bestätigt.

21. Ein Verfahren gemäß Anspruch 20, wobei die Empfänger-ID durch Auslesen von Daten aus einer Chipkarte (1000) eingegeben wird.

22. Ein Verfahren gemäß Anspruch 21, wobei die Empfänger-ID außerdem mittels manueller Eingabe einer PIN eingeben wird.

23. Ein Verfahren gemäß jedem einzelnen der Ansprüche 17 bis 22, welches das Zurückstecken des Steckers (67) in die Verankerungsvorrichtung (8) und das Sperren des Steckers (67) in der Verankerungsvorrichtung enthält.

24. Ein Verfahren gemäß Anspruch 23, welches das Eingeben einer Meldung enthält, dass ein zurückgehender Artikel an dem Stecker (67) befestigt ist, sobald dieser zurück in die Verankerungsvorrichtung (8) gesteckt wurde.

25. Ein Verfahren gemäß Anspruch 23 oder 24, welches das Eingeben einer Lieferanten-ID in die Verankerungsvorrichtung (8) enthält, wenn ein Stecker eingeführt wird, der an einem Artikel befestigt ist, der gerade geliefert wird, gefolgt vom Eingeben einer Lieferanten-ID und Freigeben des Steckers (67), wenn dieser zurück in die Verankerungsvorrichtung (8) gesteckt wurde, falls die nachfolgend eingegebene Lieferanten-ID mit jener übereinstimmt, die eingegeben wurde, als der Stecker (67) an dem Artikel befestigt eingeführt wurde.

26. Ein Verfahren gemäß jedem einzelnen der Ansprüche 17 bis 25, welches das Übertragen von Einzelheiten in Verbindung mit Steckern (67), die in die Verankerungsvorrichtung (8) gesteckt werden, und Steckern (67), die aus der Verankerungsvorrichtung (8) gezogen werden, von der Verankerungsvorrichtung (8) zu einem tragbaren Gerät oder dem besagten Handgerät (200) durch einen Lieferanten enthält.

27. Ein Verfahren gemäß Anspruch 26, welches das Übertragen besagter Einzelheiten von dem tragbaren Gerät zu einem System für Lieferverwaltung enthält.

## Revendications

1. Montage d'ancrage pour un point de livraison, le montage d'ancrage comprenant :
un corps (70) ;
un moyen de fixation servant à fixer, de manière sûre, le corps à une structure sensiblement immobile ;
une douille (80a), incluant un moyen (87a) de verrouillage mis en oeuvre électriquement, destinée à recevoir et verrouiller une fiche (67) à l'intérieur de celle-ci ;
des moyens (73, 79, 101) d'entrée servant à entrer des signaux d'identité ; et
un moyen (100) de commande configuré pour actionner ledit moyen (87a) de verrouillage pour libérer une fiche (67), reçue à l'intérieur de ladite douille (80a), en fonction de signaux d'identité, entrés par utilisation des moyens (73, 79, 101) d'entrée, **caractérisé par** un moyen (85a) de détection d'identité de fiche, associé à ladite douille (80a), destiné à détecter une identité pouvant être lue par machine portée par une fiche (67), apte à être reçue par ladite douille (80a), dans lequel le moyen (100) de commande est configuré pour verrouiller une fiche (67) dans ladite douille en réponse à une entrée d'une identité de livreur par utilisation des moyens (73, 79, 101) d'entrée, libérer une fiche (67) de ladite douille (80a) en réponse à une entrée d'une identité de destinataire par utilisation des moyens (73, 79, 101) d'entrée, et pour libérer une fiche (67) de ladite douille (80a) en réponse à une entrée d'une identité de livreur par utilisation des moyens (73, 79, 101) d'entrée.

2. Montage d'ancrage selon la revendication 1, dans lequel le moyen (100) de commande est configuré pour libérer une fiche (67) de ladite douille (80a) en réponse à une entrée d'une identité de livreur par utilisation des moyens (73, 79, 101) d'entrée, seulement si cette fiche (67), telle que déterminée par son identité détectée par le moyen (85a) de détection d'identité de fiche, a été libérée au préalable de ladite douille (80a) en réponse à une entrée d'une identité de destinataire.

3. Montage d'ancrage selon la revendication 1 ou 2, dans lequel le moyen (100) de commande est configuré pour verrouiller une fiche (67) dans ladite douille (80a) en réponse à une entrée d'une identité de livreur par utilisation des moyens (73, 79, 101) d'entrée, seulement si l'identité de la fiche (67) a été entrée par utilisation des moyens (73, 79, 101) d'entrée.

4. Montage d'ancrage selon la revendication 1, 2 ou 3, incluant un émetteur (101), dans lequel le moyen de commande est configuré pour délivrer de l'information, se rapportant à une fiche (67) qui a été libérée de ladite douille (80a) en réponse à une entrée d'une identité de livreur, par utilisation de l'émetteur (101).

5. Montage d'ancrage selon la revendication 4, dans lequel l'émetteur (101) est un émetteur à infrarouge.

6. Montage d'ancrage selon la revendication 4 ou 5, dans lequel le moyen (100) de commande est sensible aux moyens (73, 79, 101) d'entrée dans le but d'enregistrer le fait que des articles de collecte sont connectés à une fiche (67) dans ladite douille (80a), et dans lequel ladite information comprend une reconnaissance du fait que des articles de collecte sont, ou non, connectés à la fiche (67).

7. Montage d'ancrage selon l'une quelconque des revendications précédentes, dans lequel les moyens (73, 79, 101) d'entrée comprennent un lecteur (73) de carte à puce servant à entrer une identité de collecteur.

8. Montage d'ancrage selon la revendication 7, dans lequel les moyens (73, 79, 101) d'entrée comprennent en outre des touches (79) servant à entrer un PIN (numéro d'identification personnel) à des fins de confirmation d'une identité de destinataire.

9. Montage d'ancrage selon l'une quelconque des revendications précédentes, dans lequel les moyens (73, 79, 101) d'entrée comprennent un récepteur (101) destiné à recevoir une identité de livreur.

10. Montage d'ancrage selon la revendication 9, dans lequel le récepteur (101) est un récepteur à infrarouge.

11. Montage d'ancrage selon l'une quelconque des revendications précédentes, incluant :
une pluralité de douilles (80a, 80b, 80c), chacune incluant un moyen (87a, 87b, 87c) de verrouillage mis en oeuvre électriquement, destinée à recevoir et à verrouiller une fiche respective à l'intérieur de celle-ci ;
des moyens (73, 79, 101) d'entrée servant à entrer des signaux d'identité ;
un moyen (100) de commande configuré pour mettre en oeuvre lesdits moyens (87a, 87b, 87c) de verrouillage dans le but de libérer des fiches, reçues à l'intérieur desdites douilles (80a, 80b, 80c), en fonction de signaux d'identité, entrés par utilisation des moyens (73, 79, 101) d'entrée ; et
des moyens (85a, 85b, 85c) de détection d'identité de fiche, associés à chaque douille (80a, 80b, 80c), destinés à détecter une identité portée par une fiche (67), rendue apte à être reçue par lesdites douilles (67),
dans lequel le moyen (100) de commande est configuré pour verrouiller une fiche (67) dans l'une desdites douilles (80a, 80b, 80c) en réponse à une entrée d'une identité de livreur par utilisation des moyens (73, 79, 101) d'entrée, libérer une fiche (67) de l'une desdites douilles (80a, 80b, 80c) en réponse à une entrée d'une identité de destinataire par utilisation des moyens (73, 79, 101) d'entrée, et pour libérer une fiche (67) de l'une desdites douilles (80a, 80b, 80c) en réponse à une entrée d'une identité de livreur par utilisation des moyens (73, 79, 101) d'entrée, si cette fiche (67), telle que déterminée par son identité détectée par les moyens (85a, 85b, 85c) de détection d'identité de fiche, a été libérée au préalable de l'une desdites douilles (80a, 80b, 80c) en réponse à une entrée d'une identité de destinataire.

12. Système de livraison incluant un montage (8) d'ancrage selon l'une quelconque des revendications précédentes, et un dispositif à main (200) destiné à communiquer avec le montage (8) d'ancrage.

13. Système de livraison selon la revendication 12, dans lequel le dispositif à main (200) est configuré pour entrer une identité de livreur dans ledit moyen (73, 79, 101) d'entrée.

14. Système de livraison selon la revendication 12 ou 13, dans lequel le montage (8) d'ancrage inclut un émetteur (101), et le moyen (100) de commande est configuré pour communiquer de l'information, se rapportant à une fiche (67) qui a été libérée de l'une desdites douilles (80a) en réponse à une entrée d'une identité de livreur, audit dispositif à main (200) par utilisation de l'émetteur (101).

15. Système de livraison selon la revendication 14, dans lequel l'émetteur (101) est un émetteur à infrarouge.

16. Système de livraison selon la revendication 14 ou 15, dans lequel le moyen (100) de commande est sensible aux moyens (73, 79, 101) d'entrée pour enregistrer le fait que des articles de collecte sont connectés à une fiche (67) dans l'une desdites douilles (80), et dans lequel ladite information comprend la reconnaissance du fait que des articles de collecte sont, ou non, connectés à la fiche (67).

17. Procédé de livraison d'un article, le procédé comprenant :
la réception d'une commande concernant un article ;
le transport dudit article et d'un élément (66) de fixation, pourvu d'une fiche (67), jusqu'à un site de livraison ;
la fixation dudit article à un montage (8) d'ancrage par enfichage de la fiche (67) dans une douille (80a) qui se trouve dans ledit montage (8) d'ancrage ;
**caractérisé par**
l'émission d'une identité pouvant être lue par machine de ladite fiche (67) et d'une identité de montage d'ancrage dudit montage (8) d'ancrage vers un dispositif à main (200) ;
le verrouillage de ladite fiche (67) dans ladite douille (80a) ; et
l'émission d'une identité de livreur dudit dispositif à main (200) vers ledit montage (8) d'ancrage et la validation de ladite identité de livreur,
dans lequel le verrouillage de ladite fiche (67) dans ladite douille (80a) dépend de la validité de ladite identité de livreur.

18. Procédé selon la revendication 17 incluant l'émission de ladite identité de fiche et de ladite identité de montage d'ancrage vers un système (300, 301, 302, 303) d'administration de commande et la mémorisation de ladite identité de fiche dans ledit système (300, 301, 302, 303) en association avec un enregistrement dudit montage (8) d'ancrage.

19. Procédé de livraison d'un article, le procédé comprenant :
la réception d'une commande concernant un article ;
l'attribution d'un élément (66) de fixation à l'article et à un site de livraison,
le transport dudit article et dudit élément (66) de fixation, pourvu d'une fiche (67), jusqu'au site de livraison ; et
la fixation dudit article à un montage (8) d'ancrage par enfichage de la fiche (67) dans une douille (80a) dudit montage (8) d'ancrage ;
**caractérisé par**
la fiche (67) ayant une identité pouvant être lue par machine ;
l'émission de l'identité de la fiche (67) vers le montage (8) d'ancrage au niveau du site de livraison ;
la lecture de l'identité de la fiche (67) par le montage (8) d'ancrage ;
la comparaison de l'identité émise et de l'identité lue de la fiche (67) dans le montage (8) d'ancrage ; et
le verrouillage automatique de la fiche (67) dans le montage (8) d'ancrage si l'identité émise et l'identité lue de la fiche (67) concordent.

20. Procédé selon la revendication 17, 18 ou 19, incluant l'entrée d'une identité de destinataire dans le montage (8) d'ancrage, le contrôle de l'identité de destinataire dans le montage d'ancrage, et la libération de la fiche si l'identité de destinataire est vérifiée.

21. Procédé selon la revendication 21, dans lequel l'identité de destinataire est entrée par lecture de données à partir d'une carte à puce (1000).

22. Procédé selon la revendication 22, dans lequel l'identité de destinataire est en outre entrée au moyen d'une entrée manuelle d'un PIN.

23. Procédé selon l'une quelconque des revendications 17 à 22, incluant le réenfichage de la fiche (67) dans le montage (8) d'ancrage et le verrouillage de la fiche (67) dans le montage d'ancrage.

24. Procédé selon la revendication 23, incluant l'entrée d'une indication du fait qu'un article de renvoi est assujetti à la fiche (67) lorsqu'elle a été réenfichée dans le montage (8) d'ancrage.

25. Procédé selon la revendication 23 ou 24, incluant l'entrée d'une identité de livreur dans le montage (8) d'ancrage lors de l'introduction d'une fiche assujettie à un article livré, l'entrée ultérieure d'une identité de livreur et la libération de la fiche (67), lorsqu'elle a été réenfichée dans le montage (8) d'ancrage, si l'identité de livreur entrée ultérieurement concorde avec l'identité du moment où la fiche (67) a été introduite assujettie audit article.

26. Procédé selon l'une quelconque des revendications 17 à 25, incluant l'émission de détails associés à des fiches (67), enfichées dans le montage (8) d'ancrage, et à des fiches (67), déconnectées du montage (8) d'ancrage par un livreur, du montage (8) d'ancrage vers un dispositif portatif ou audit dispositif à main (200).

27. Procédé selon la revendication 26, incluant la transmission desdits détails du dispositif portatif vers un système d'administration de livraisons.
